(19) Europäisches Patentamt / European Patent Office / Office européen des brevets

(11) **EP 4 317 209 A1**

(12) **EUROPEAN PATENT APPLICATION**
published in accordance with Art. 153(4) EPC


(43) Date of publication:
**07.02.2024 Bulletin 2024/06**

(21) Application number: **22775746.5**

(22) Date of filing: **24.03.2022**

(51) International Patent Classification (IPC):
***C08F 8/48** (2006.01)* ***C08F 8/30** (2006.01)*
***C08L 33/12** (2006.01)* ***G02B 1/04** (2006.01)*

(52) Cooperative Patent Classification (CPC):
**C08F 8/30; C08F 8/48; C08L 33/12; G02B 1/04**

(86) International application number:
**PCT/JP2022/013845**

(87) International publication number:
**WO 2022/202965 (29.09.2022 Gazette 2022/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.03.2021 JP 2021049833**



(71) Applicant: **Kuraray Co., Ltd.**
**Kurashiki-shi, Okayama 710-0801 (JP)**

(72) Inventors:
- **NOMOTO, Yusaku**
  **Tainai-shi, Niigata 959-2691 (JP)**
- **KAINO, Masafumi**
  **Tainai-shi, Niigata 959-2691 (JP)**
- **NAKAMURA, Kimitoshi**
  **Tainai-shi, Niigata 959-2691 (JP)**

(74) Representative: **Müller-Boré & Partner Patentanwälte PartG mbB**
**Friedenheimer Brücke 21**
**80639 München (DE)**


(54) **METHACRYLIC COPOLYMER, METHACRYLIC RESIN COMPOSITION AND METHOD FOR PRODUCING SAME, AND MOLDED BODY**


(57) The present invention addresses the problem of providing a methacrylic resin composition having high transparency, low haze, high heat resistance, high elastic modulus, and low water absorptivity; and providing a molded article thereof. Provided is a methacrylic copolymer comprising 5 to 96 mass% of a methyl methacrylate unit; 1 to 70 mass% of a structural unit (R) having in its main chain at least one ring structure selected from the group consisting of a glutaric anhydride unit and an N-substituted glutarimide unit; 1 to 48 mass% of an $\alpha$-methylstyrene unit; and 1 to 48 mass% of a styrene unit, the N-substituted glutarimide unit being represented by the following formula (I):

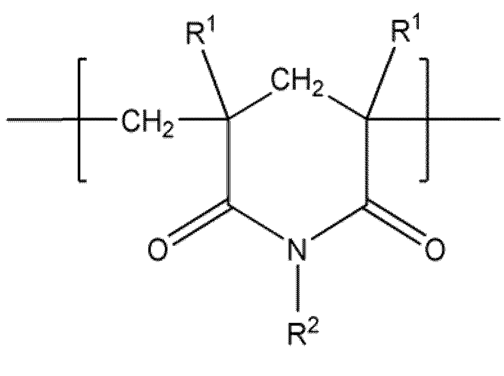

(I)

(wherein $R^1$ and $R^2$ are as described in the specification) .


EP 4 317 209 A1

## Description

Technical Field

Cross-Reference to Related Applications

This application claims priority from Japanese Patent Application No. 2021-049833, filed on March 24, 2021, the disclosure of which is incorporated herein by reference in its entirety. The present invention relates to a methacrylic copolymer, a methacrylic resin composition, and a molded article.

Background Art

Methacrylic resins are excellent in transparency, weatherability, surface hardness, etc. Various components used in items such as display components, electronic and electric components, and transport machinery parts can be obtained by molding an acrylic resin composition containing a methacrylic resin. There has been demand for advanced performance of various components; in particular, there has been strong demand for improvement in heat resistance and elastic modulus.

A long-known method for improving the heat resistance and elastic modulus of a methacrylic resin is imidization of a methacrylic resin. For example, PTL 1 discloses a method of subjecting a methacrylic resin and a primary amine to pyrolytic condensation, and PTL 2 discloses a method of reacting an acrylic polymer with ammonia or a primary amine. However, the obtained polymers become prone to absorption of water due to imidization and have greatly reduced fluidity and are thus not widely used in molding materials.

A method of imidizing a random copolymer of methyl methacrylate and styrene is known to limit water absorption rate due to imidization. The Examples of PTL 3 disclose a method of imidizing a methyl methacrylate-styrene copolymer with methylamine in a methanol solvent. PTL 4 discloses a glutarimide resin of a methyl methacrylate-styrene copolymer in which the amount of the primary alcohol in the resin is 1000 ppm or less. An imide resin of a methyl methacrylate-styrene copolymer has lower water absorption rate due to the styrene unit but has impaired heat resistance.

A method of blending a methacrylic resin with an imide resin is known to improve fluidity deterioration due to imidization. PTL 5 discloses a blend resin of an imide resin and a methacrylic resin, having a degree of imidization within a specific range and having the acid and acid anhydride in amounts within specific ranges. However, the blend resin has an opaque appearance because of the incompatibility of the imide resin with the methacrylic resin.

As described above, there has been room for the investigation of techniques for increasing heat resistance and elastic modulus while maintaining transparency, water absorption rate, and fluidity, which are inherent in methacrylic resins.

Citation List

Patent Literature

PTL 1: US Patent No. 2416209

PTL 2: US Patent No. 4246374

PTL 3: JPH02-42363A

PTL 4: JP2006-249202A

PTL 5: JPH10-158529A


Summary of Invention

Technical Problem

In view of the circumstances above, an object of the present invention is to provide a methacrylic resin composition that exhibits high transparency, a low haze, a high level of heat resistance, a high elastic modulus, and a low water absorption rate, and to provide a molded article thereof.

Solution to Problem

The present inventors conducted research to achieve the above object. As a result, the present invention, which includes the following, has been accomplished.

[1] A methacrylic copolymer comprising

5 to 96 mass% of a methyl methacrylate unit;
1 to 70 mass% of a structural unit (R) having in its main chain at least one ring structure selected from the group consisting of a glutaric anhydride unit and an N-substituted glutarimide unit represented by the following formula (I):

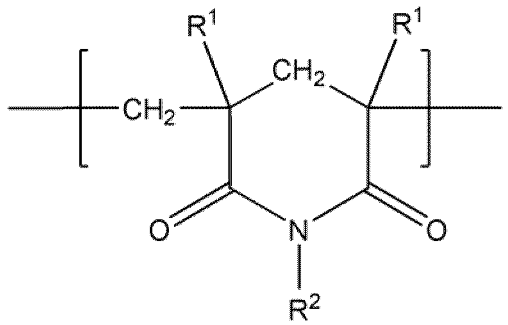

(I)

wherein each $R^1$ is independently a hydrogen atom or methyl, and $R^2$ is $C_1$-$C_{18}$ alkyl, $C_3$-$C_{12}$ cycloalkyl, or a $C_6$-$C_{15}$ organic group containing an aromatic ring;

1 to 48 mass% of an α-methylstyrene unit; and
1 to 48 mass% of a styrene unit.

[2] The methacrylic copolymer according to [1], wherein the structural unit (R) is the N-substituted glutarimide unit represented by formula (I).
[3] The methacrylic copolymer according to [1], wherein the total content of the α-methylstyrene unit and the styrene unit is 2 to 49 mass%, and the proportion of the α-methylstyrene unit to the total content is 30 to 95 mass%.
[4] The methacrylic copolymer according to [1], wherein the ratio of the total content of the methyl methacrylate unit and the α-methylstyrene unit to the content of the styrene unit is 3.0 or more.
[5] The methacrylic copolymer according to [1] comprising 0 to 1 mass% of the methacrylic acid unit.
[6] The methacrylic copolymer according to [1] having a glass transition temperature of 140°C or higher.
[7] The methacrylic copolymer according to [1] having a saturated water absorption rate of 3.0% or less.
[8] The methacrylic polymer according to [1], wherein the methacrylic polymer has a melt flow rate of 2.0 g/10 minutes or more as measured at 230°C under a load of 3.8 g by a method specified in JIS K 7210.
[9] A methacrylic resin composition comprising 20 to 100 mass% of the methacrylic copolymer (A) of [1] and 0 to 80 mass% of a methacrylic resin (P).
[10] The methacrylic resin composition according to [8], wherein the methacrylic resin composition has a haze of 5.0% or less as measured by a method specified in JIS K 7136.
[11] A molded article comprising the methacrylic copolymer of [1] or the methacrylic resin composition of [8].
[12] A film comprising the methacrylic copolymer of [1] or the methacrylic resin composition of [8].
[13] An optical film comprising the methacrylic copolymer of [1] or the methacrylic resin composition of [8].
[14] A method for producing the methacrylic copolymer of [1], comprising

continuously supplying a reactant comprising a monomer mixture to a tank reactor, the monomer mixture containing 51 to 98 mass% of methyl methacrylate, 1 to 48 mass% of an α-methylstyrene unit, and 1 to 48 mass% of styrene;
polymerizing the monomer mixture in the tank reactor until a polymerization conversion rate of 30 to 60 mass% is achieved to obtain a reaction product;
removing the monomer mixture in the reaction product from the reaction product; and
subjecting the obtained methacrylic copolymer to a ring structure-forming reaction.

[15] The method for producing a methacrylic copolymer according to [14], wherein the ring structure-forming reaction is an imide cyclization reaction in which an imidizing agent is added to a precursor polymer in an extruder and the resulting mixture is kneaded and allowed to react.

According to the present invention, while fluidity that allows for molding processing is maintained, a molded article having high transparency, high heat resistance, high elastic modulus, and a low water absorption rate can be obtained.

Description of Embodiments

The singular forms (the terms "a," "an," and "the") in the present specification shall be construed to include both the singular and the plural, unless otherwise indicated in the specification or clearly contradicted by context.

Methacrylic Copolymer

The methacrylic copolymer of the present invention contains 5 to 96 mass% of a methyl methacrylate unit, 1 to 70 mass% of a structural unit (R), 1 to 48 mass% of an $\alpha$-methylstyrene unit, 1 to 48 mass% of a styrene unit, and 0 to 1 mass% of a methacrylic acid unit. The methacrylic copolymer of the present invention may further contain another vinyl monomer unit copolymerizable with methyl methacrylate. Such another vinyl monomer unit copolymerizable with methyl methacrylate may be a methacrylamide unit represented by the following formula (A) or a 2-(hydroxyalkyl)acrylate unit represented by the following formula (B).

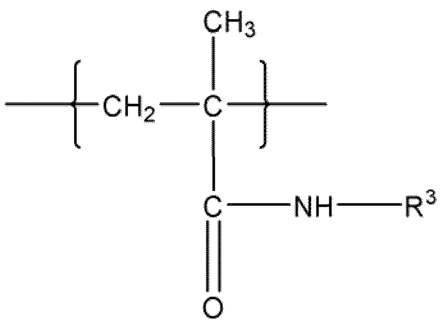

,

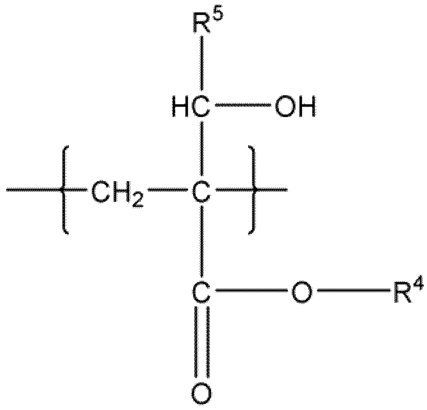

(A) (B)

wherein $R^3$ is a hydrogen atom, $C_1$-$C_{18}$ alkyl, $C_3$-$C_{12}$ cycloalkyl, or a $C_6$-$C_{15}$ organic group containing an aromatic ring, preferably a hydrogen atom, methyl, n-butyl, cyclohexyl, or benzyl, and more preferably methyl, n-butyl or cyclohexyl; and $R^4$ and $R^5$ are each independently a hydrogen group or a $C_1$-$C_{20}$ organic group, preferably a hydrogen atom or a $C_1$-$C_{10}$ organic group, and more preferably a hydrogen atom or a $C_1$-$C_5$ organic group. The organic group is not particularly limited as long as the organic group contains 1 to 20 carbon atoms. Examples of the organic acid group include linear or branched alkyl groups, linear or branched aryl groups, $-OCOCH_3$, and -CN. The organic group may contain a heteroatom such as an oxygen atom. $R^4$ is preferably a methyl group and $R^5$ is preferably a hydrogen atom.

The proportion of the methyl methacrylate unit in the methacrylic copolymer of the present invention is 5 to 96 mass%, preferably 30 to 95 mass%, more preferably 35 to 90 mass%, and still more preferably 40 to 80 mass%, based on the total structural units. If the proportion of the methyl methacrylate unit is less than this range, the total light transmittance of the obtained methacrylic copolymer deteriorates. If the proportion of the methyl methacrylate unit is more than this range, the thermal decomposition resistance of the obtained methacrylic copolymer is low.

The proportion of the $\alpha$-methylstyrene unit in the methacrylic copolymer (A) of the present invention is 1 to 48 mass%, preferably 3 to 40 mass%, more preferably 5% to 35 mass%, and still more preferably 7% to 30 mass%, based on the total structural units. If the proportion of the $\alpha$-methylstyrene unit is lower than this range, the obtained methacrylic copolymer has low heat resistance and low elastic modulus. If the proportion of the $\alpha$-methylstyrene unit exceeds 48 mass%, the obtained methacrylic copolymer has low thermal decomposition resistance. Further, the obtained methacrylic copolymer has low polymerizability, resulting in low productivity. Furthermore, a glutarimidation reaction by intramolecular cyclization of two adjacent structural units derived from (meth)acrylic acid described below is inhibited.

The proportion of the styrene unit in the methacrylic copolymer of the present invention is 1% to 48 mass%, preferably 3% to 40 mass%, more preferably 5% to 35 mass%, and still more preferably 7% to 30 mass%, based on the total structural units. If the proportion of the styrene unit is lower than this range, the obtained methacrylic copolymer has a lower thermal decomposition resistance and reduced fluidity. If the proportion of styrene units exceeds 48 mass%, the methacrylic copolymer has reduced heat resistance. Furthermore, a glutarimidation reaction by intramolecular cyclization of two adjacent structural units derived from (meth)acrylic acid described below is inhibited.

The total proportion of the α-methylstyrene unit and the styrene unit in the methacrylic copolymer of the present invention is preferably 2 to 49 mass%, more preferably 5 to 40 mass%, and still more preferably 10 to 30 mass%, based on the total structural units. If the total proportion of the α-methylstyrene unit and the styrene unit is within the above range, a glutarimidation reaction by intramolecular cyclization of two adjacent structural units derived from (meth)acrylic acid, which will be described later, is difficult to inhibit. The proportion of the α-methylstyrene unit is preferably 30 to 95 mass%, more preferably 35 to 90 mass%, and still more preferably 40 to 85 mass%, based on the total proportion of the α-methylstyrene unit and the styrene unit. When the proportion of the α-methylstyrene unit is within the above range, the methacrylic copolymer of the present invention has high heat resistance and rigidity.

The ratio of the total content of the methyl methacrylate unit and the α-methylstyrene unit to the content of the styrene unit is preferably 3.0 or more, more preferably 10.0 or more. When the ratio of the total content of the methyl methacrylate unit and the α-methylstyrene unit to the content of the styrene unit is within the above range, the methacrylic copolymer has excellent compatibility with the methacrylic resin (P) .

The structural unit (R) is a structural unit having at least one ring structure selected from the group consisting of a glutaric anhydride unit and an N-substituted or unsubstituted glutarimide unit in the main chain. The methacrylic copolymer of the present invention may contain a methacrylamide unit represented by the above formula (A) and/or a 2-(hydroxyalkyl)acrylate unit represented by the above formula (B) in the main chain.

The methacrylic copolymer of the present invention may contain a lactone ring unit in addition to the structural unit (R). The lactone ring unit is a structural unit containing a >CH--C(=O)- group in the ring structure. In the structural unit containing a >CH-O-C(=O)- group in the ring structure, the number of ring-constituting elements is preferably 4 to 8, more preferably 5 to 6, and most preferably 6. Examples of structural units containing a >CH-O-C(=O)- group in the ring structure include lactonediyl structural units such as β-propiolactonediyl structural units, γ-butyrolactonediyl structural units, and δ-valerolactonediyl structural units. The structural unit containing a >CH-O-C(=O)- group in the ring structure can be obtained, for example, by intramolecular cyclization of a polymer having a hydroxy group and an ester group with a hydroxy group and an ester group. ">C" in the formula means that the carbon atom C has two bonding hands.

Examples of δ-valerolactone diyl structural units include structural units represented by formula (IV):

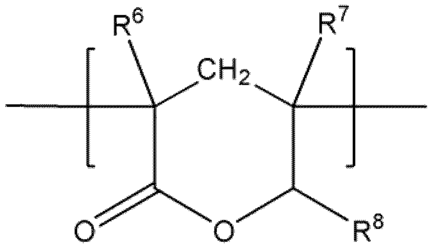

(IV)

wherein $R^6$, $R^7$ and $R^8$ are each independently a hydrogen atom or a $C_1$-$C_{20}$ organic group, preferably a hydrogen atom or a $C_1$-$C_{10}$ organic group, and more preferably a hydrogen atom or a $C_1$-$C_5$ organic group. Here, the organic group is not particularly limited as long as the organic group contains 1 to 20 carbon atoms. Examples include linear or branched alkyl groups, linear or branched aryl groups, $-OCOCH_3$, and -CN. The organic group may contain a heteroatom such as an oxygen atom. $R^6$ and $R^7$ are preferably methyl and $R^8$ is preferably a hydrogen atom.

The lactone ring unit can be incorporated into the methacrylic copolymer by the method described in JP2000-230016A, JP2001-151814A, JP2002-120326A, JP2002-254544A, JP2005-146084A, or the like, for example, by intramolecular cyclization of a structural unit derived from 2-(hydroxyalkyl)acrylate and a structural unit derived from methyl (meth)acrylate.

The glutaric anhydride unit is a unit having a 2,6-dioxodihydropyrandiyl structure. Examples of the unit having a 2,6-dioxodihydropyrandiyl structure include structural units represented by formula (V):

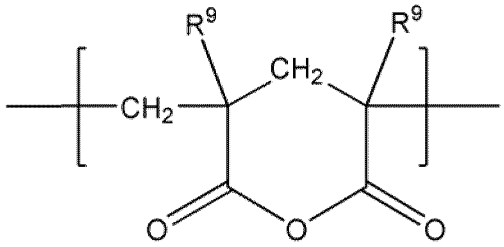

(V)

wherein each $R^9$ is independently a hydrogen atom or $C_1$-$C_5$ alkyl, and preferably methyl.

The unit having a 2,6-dioxodihydropyrandiyl structure can be incorporated into the methacrylic copolymer by the method described in JP2007-197703A, JP2010-96919A, or the like, for example, by intramolecular cyclization of two adjacent structural units derived from (meth)acrylic acid or intramolecular cyclization of a structural unit derived from (meth)acrylic acid and a structural unit derived from methyl (meth)acrylate.

The N-substituted or unsubstituted glutarimide unit is a unit having an N-substituted or unsubstituted 2,6-dioxopiperidinediyl structure. Examples of the unit having an N-substituted or unsubstituted 2,6-dioxopiperidinediyl structure include structural units represented by formula (I):

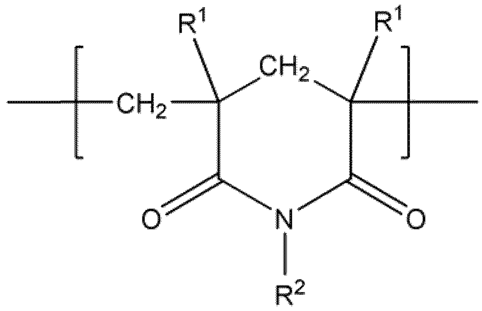

(I)

wherein each $R^1$ is independently a hydrogen atom or methyl, and two $R^1$s are both preferably methyl. $R^2$ is a hydrogen atom, $C_1$-$C_{18}$ alkyl, $C_3$-$C_{12}$ cycloalkyl, or a $C_6$-$C_{15}$ organic group containing an aromatic ring, preferably methyl, n-butyl, cyclohexyl, or benzyl, more preferably methyl, n-butyl, or cyclohexyl, and most preferably methyl.

The structural unit represented by formula (I) may be produced, for example, by the reaction of the corresponding acid anhydride (IIa) with an imidizing agent represented by $R^2NH_2$ as shown in Scheme (i), or by an intramolecular cyclization reaction of a copolymer having a partial structure of formula (III). Heating is preferably performed to convert the structural unit represented by formula (III) to the structural unit represented by formula (I) by intramolecular cyclization reaction.

Scheme (i)

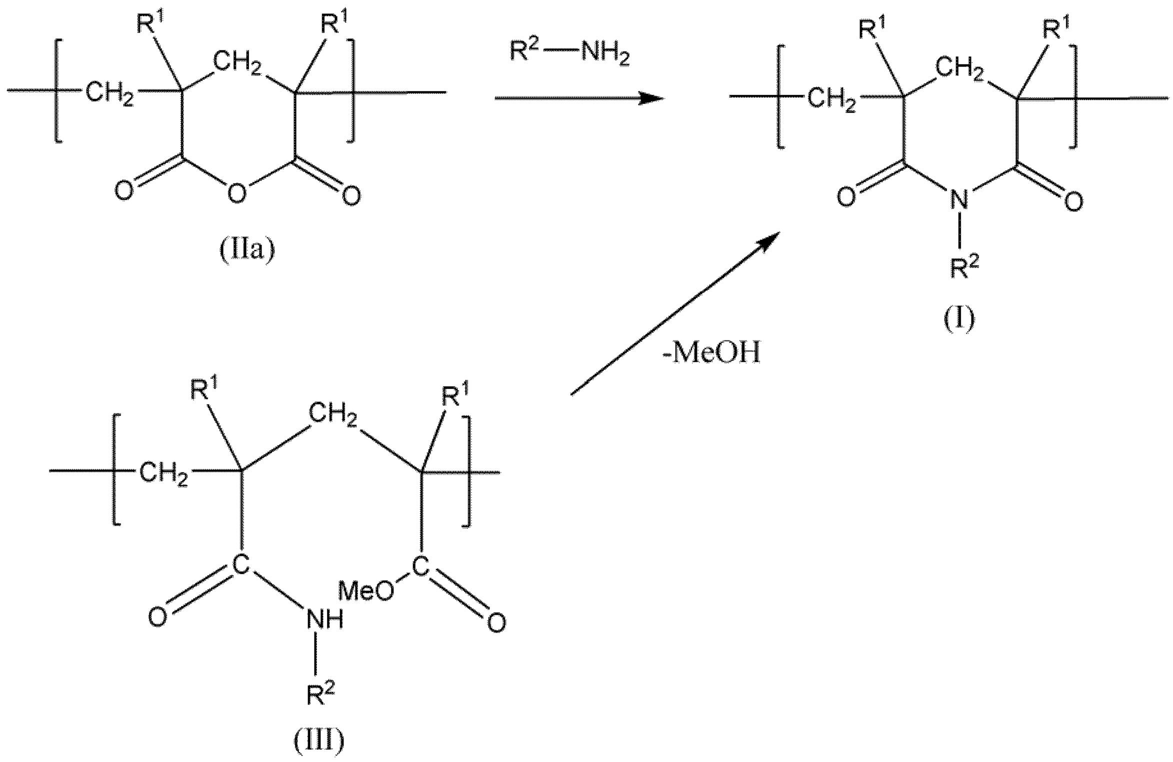

(IIa)
(I)
(III)

wherein $R^1$ and $R^2$ are as defined above.

The N-substituted or unsubstituted glutarimide unit can be obtained by the method described in WO2005/10838A1, JP2008-274742A, JP2008-273140A, JP2008-274187A, or the like, specifically, for example, by a method comprising reacting two adjacent structural units derived from (meth)acrylic acid or glutaric anhydride units with an imidizing agent, for example, an aliphatic hydrocarbon-containing amine such as ammonia, methylamine, ethylamine, n-propylamine, isopropylamine, n-butylamine, isobutylamine, tert-butylamine, or n-hexylamine; an aromatic hydrocarbon-containing amine such as aniline, toluidine, or trichloroaniline; a cycloaliphatic hydrocarbon-containing amine such as cyclohexylamine; or urea, 1,3-dimethylurea, 1,3-diethylurea, or 1,3-dipropylurea. Among these, methylamine is preferred. When the imidization reaction is performed, a part of the methyl methacrylate unit may be hydrolyzed to form a carboxyl group. This carboxyl group is preferably returned to the original methyl methacrylate unit by an esterification reaction that is performed by treatment with an esterifying agent. The esterifying agent is not particularly limited as long as the effect of the present invention can be provided. Preferable examples of the esterifying agent include dimethyl carbonate and trimethyl acetate. In addition to the esterifying agent, a tertiary amine, such as trimethylamine, trimethylamine, or tributylamine, may be used together as a catalyst.

The methacrylic copolymer of the present invention may contain an N-substituted or unsubstituted maleimide unit in addition to the structural unit (R). The N-substituted or unsubstituted maleimide unit is a unit having an N-substituted or unsubstituted 2,5-pyrrolidinedione structure.

Examples of the unit having an N-substituted or unsubstituted 2,5-pyrrolidinedione structure include a structural unit represented by formula (VI):

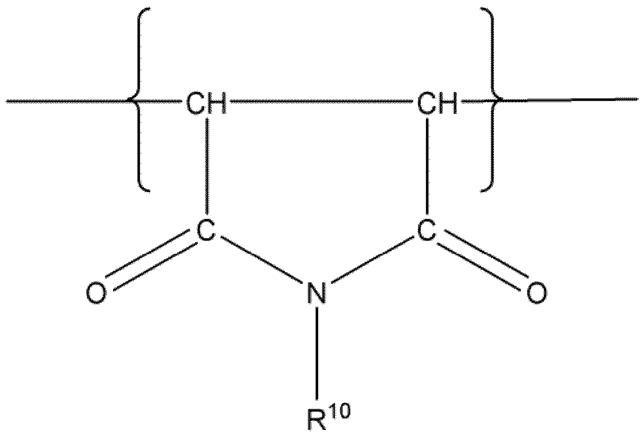

(VI)

wherein $R^{10}$ is a hydrogen atom, $C_1$-$C_{18}$ alkyl, $C_3$-$C_{12}$ cycloalkyl, or a $C_6$-$C_{15}$ organic group containing an aromatic ring. The structural unit represented by formula (VI) can be incorporated into a methacrylic polymer, for example, by a method of polymerizing a monomer mixture containing the monomer represented by formula (VI), or by a reaction of a maleic anhydride unit in a reaction product obtained by polymerizing a monomer mixture containing maleic anhydride with an imidizing agent represented by $R^3NH_2$.

The N-substituted or unsubstituted maleimide unit is obtained by the method described in JP61-026924A, JPH07-042332A, JPH09-100322A, JP2001-329021A, or the like, specifically, by reacting a maleic anhydride unit with an imidizing agent, for example, an aliphatic hydrocarbon group-containing amine such as ammonia, methylamine, ethylamine, n-propylamine, isopropylamine, n-butylamine, isobutylamine, tert-butylamine, or n-hexylamine; an aromatic hydrocarbon group-containing amine such as aniline, toluidine, or trichloroaniline; an alicyclic hydrocarbon group-containing amine such as cyclohexylamine; urea, 1,3-dimethylurea, 1,3-diethylurea, or 1,3-dipropylurea. Among these, methylamine is preferred.

The proportion of the structural unit (R) in the methacrylic copolymer of the present invention is 1 to 70 mass%, preferably 12 to 65 mass%, more preferably 15 to 60 mass%, and still more preferably 20 to 50 mass%, based on the total structural units. The higher the content of the structural unit (R), the higher the heat resistance and the thermal decomposition resistance of the methacrylic copolymer. However, the higher the content of the structural unit (R), the higher the melt viscosity, which tends to degrease molding processability.

The proportion of the methacrylic acid unit in the methacrylic copolymer of the present invention is preferably 0 to 1 mass%, more preferably 0 to 0.5 mass%, still more preferably 0 to 0.1 mass%, particularly preferably 0 to 0.01 mass%, and most preferably 0 mass%, based on the total structural units. When the proportion of the methacrylic acid unit is 1 mass% or less, the water absorption rate of the methacrylic copolymer can be reduced; furthermore, the methacrylic copolymer can have better compatibility with a methacrylic resin and a methacrylic resin composition with high transparency can be obtained, thus being preferable.

The methacrylic acid unit is by-produced as an intermediate when the structural unit (R) is produced. The methacrylic acid unit is not produced by copolymerizing a monomer mixture with other monomers, such as methyl methacrylate, $\alpha$-methylstyrene, and styrene. The methacrylic acid unit is preferably entirely consumed in the reaction of forming the structural unit (R); however, there are cases in which the methacrylic acid unit remains in the methacrylic copolymer.

The methacrylic copolymer of the present invention may contain another vinyl monomer unit that is copolymerizable with the methyl methacrylate unit. Such another vinyl monomer unit copolymerizable with the methyl methacrylate unit may be used alone or in a combination of two or more.

Such another vinyl monomer unit can be appropriately selected according to the properties required of the methacrylic copolymer of the present invention. When properties such as thermal stability, fluidity, chemical resistance, optical properties, and compatibility with other resins are particularly required, at least one member selected from the group consisting of acrylate monomer units, aromatic vinyl monomer units excluding styrene and $\alpha$-methyl styrene, and vinyl cyanide monomer units is preferably used.

The acrylate monomer unit that constitutes the methacrylic copolymer of the present invention is not particularly limited. From the viewpoint of heat resistance, fluidity, heat stability, productivity, etc., methyl acrylate, ethyl acrylate, n-propyl acrylate, n-butyl acrylate, sec-butyl acrylate, 2-ethylhexyl acrylate, benzyl acrylate, cyclohexyl acrylate, and phenyl acrylate are preferred; methyl acrylate, ethyl acrylate, and n-butyl acrylate are more preferred. From the viewpoint of productivity, methyl acrylate and ethyl acrylate are even more preferred.

The acrylate monomer unit may be used alone or in a combination of two or more.

From the viewpoint of heat resistance and thermal stability, the content of the acrylate monomer unit, when

used, is preferably 20 mass% or less, and more preferably 10 mass% or less, based on the total structural units.

The aromatic vinyl monomer units excluding styrene and α-methylstyrene that constitute the methacrylic copolymer of the present invention are not particularly limited. From the viewpoint of heat resistance, fluidity, heat resistance stability, productivity, etc., preferable examples of the aromatic vinyl monomer units include o-methylstyrene, m-methylstyrene, p-methylstyrene, 2,4-dimethylstyrene, 2,5-dimethylstyrene, 3,4-dimethylstyrene, 3,5-dimethylstyrene, p-ethylstyrene, m-ethylstyrene, o-ethylstyrene, p-tert-butylstyrene, 1-vinylnaphthalene, 2-vinylnaphthalene, 1,1-diphenylethylene, isopropenyltoluene, isopropenylethylbenzene, isopropenylpropylbenzene, isopropenylpropylbenzene, isopropenylbutylbenzene, isopropenylbenzylbenzene, isopropenylhexylbenzene, and isopropenyloctylbenzene.

The aromatic vinyl monomer units excluding styrene and α-methylstyrene may be used alone or in a combination of two or more.

From the viewpoint of heat resistance and thermal stability, the content of the aromatic vinyl monomer units excluding styrene and α-methylstyrene, when used, is preferably 20 mass% or less, and more preferably 15 mass% or less, based on the total structural units.

The vinyl cyanide monomer unit that constitutes the methacrylic copolymer of the present invention is not particularly limited. From the viewpoint of heat resistance, fluidity, heat resistance stability, chemical resistance, productivity, etc., acrylonitrile (AN), methacrylonitrile, vinylidene cyanide, and the like are preferable. From the viewpoint of ease of availability and imparting chemical resistance, acrylonitrile is particularly preferable.

Such vinyl cyanide monomer units may be used alone or in a combination of two or more.

From the viewpoint of heat resistance and thermal stability, the content of the vinyl cyanide monomer units, when used, is preferably 20% or less, more preferably 10% or less, based on the total structural units.

The acrylate monomer units, aromatic vinyl monomer units excluding styrene and α-methylstyrene, and vinyl cyanide monomer units that constitute the methacrylic copolymer of the present invention are not particularly limited. For example, such monomer units may be monomers corresponding to methacrylamide units represented by formula (A) or monomers corresponding to 2-(hydroxyalkyl)acrylate units represented by formula (B). Specific examples include amide compounds such as acrylamide and methacrylamide.

Among the monomers that constitute the monomer units described above, at least one member selected from the group consisting of methyl acrylate, ethyl acrylate, and acrylonitrile is preferable from the viewpoint of ease of availability.

The proportion of another vinyl monomer unit copolymerizable with the methyl methacrylate unit in the methacrylic copolymer of the present invention is preferably 0 to 20 mass%, more preferably 0 to 15 mass%, and still more preferably 0 to 10 mass%, based on the total structural units. If the methacrylic copolymer contains another vinyl monomer unit copolymerizable with the methyl methacrylate unit in a proportion of more than 20 mass%, heat resistance and rigidity are reduced. The proportions of the methyl methacrylate unit, α-methylstyrene unit, styrene unit, structural unit (R), methacrylic acid unit, and another vinyl monomer unit can be measured, for example, by $^{1}H$-NMR, $^{13}C$-NMR, or infrared spectrometry.

The methacrylic copolymer of the present invention preferably has a weight average molecular weight (Mw) of 40,000 to 250,000, more preferably 50,000 to 200,000, and even more preferably 55,000 to 180,000. When the Mw is 40,000 or more, the molded article of the present invention has, for example, increased strength and enhanced toughness. When the Mw is 250,000 or less, the methacrylic copolymer of the present invention has enhanced fluidity, thus resulting in improved molding processability.

The weight average molecular weight (Mw) is a value in terms of standard polystyrene, which is calculated by converting a chromatogram measured by gel permeation chromatography into the corresponding molecular weight of standard polystyrene.

The methacrylic polymer of the present invention preferably has an acid value of 0.01 to 0.30 mmol/g, more preferably 0.05 to 0.28 mmol/g. The acid value is a value proportional to the content of the carboxylic acid unit and the carboxylic anhydride unit in the methacrylic copolymer. The acid value can be calculated, for example, by the method described in JP2005-23272A. When the acid value is within the above range, the methacrylic copolymer has an excellent balance between heat resistance, mechanical properties, and molding processability; furthermore, the methacrylic copolymer tends to have excellent compatibility with methacrylic resin.

The lower limit of the glass transition temperature of the methacrylic copolymer of the present invention is preferably 130°C, more preferably 140°C, and even more preferably 143°C. The upper limit of the glass transition temperature of the methacrylic copolymer of the present invention is not particularly limited, but is preferably 170°C.

In the present specification, the "glass-transition temperature (Tg)" is measured in accordance with JIS K 7121. Specifically, the DSC curve is measured under conditions in which the methacrylic copolymer is once heated to 230°C, then cooled to room temperature, and then heated from room temperature to 230°C at a temperature rise rate of 10°C/min. The midpoint determined from the DSC curve measured during the second temperature rise is obtained as the "glass transition temperature (Tg)."

The saturated water absorption rate of the methacrylic copolymer of the present invention can be measured

under the following conditions. The methacrylic copolymer is formed into a 1.0 mm-thick sheet by press forming. A test piece of 50 mm × 50 mm is cut out from the central portion of the obtained press-molded sheet and dried in a dryer at 80°C for 16 hours or more. After the dried test piece is cooled to room temperature in a dessicator, the weight is measured with an accuracy of 0.1 mg, and this weight is defined as the initial weight $W_o$. The test piece is immersed in distilled water at 23°C. After 24 hours of immersion, the test piece is removed from the water and the surface moisture is completely wiped off with a clean dry cloth or filter paper. Within one minute after removal from the water, the test piece is again weighed with an accuracy of 0.1 mg. The test piece is immersed again and weighed again after 24 hours in the same manner as above. The weight when the weight change rate of the test piece falls within 0.02% of $W_o$ is defined as the saturation weight $W_s$. The saturated water absorption rate can be calculated from formula (2).

$$\text{Saturated water absorption rate} = ((Ws - Wo) / Wo) \times 100 \qquad (2)$$

The saturated water absorption rate is preferably 3.0% or less, more preferably 2.8% or less, and still more preferably 2.5% or less.

The methacrylic polymer of the present invention preferably has a melt flow rate (referred to below as "MFR") in the range of 2.0 to 30 g/10 minutes. The lower limit of the MFR is more preferably 2.3 g/10 minutes or more, and still more preferably 2.5 g/10 minutes. The upper limit of the MFR is more preferably 25 g/10 minutes or less, and still more preferably 20 g/10 minutes or less. When the MFR is in the range of 2.0 to 30 g/10 minutes, the stability of heat-melt molding is good. The MFR in the present specification is a value measured at a temperature of 230°C under a load of 3.8 kg using a melt indexer in accordance with JIS K 7210.

The methacrylic copolymer of the present invention has a 1% thermogravimetric loss temperature in a nitrogen atmosphere of preferably 300°C or higher, more preferably 305°C or higher. The 1% thermogravimetric loss temperature can be measured using a thermogravimetric analyzer (TGA). The 1% thermogravimetric loss temperature can be determined as a temperature at which 1% thermogravimetric weight is lost, based on the weight fed.

Production Method

The methacrylic copolymer of the present invention can be obtained by a method comprising subjecting a copolymer of methyl methacrylate (MMA), α-methylstyrene (αMSt), and styrene (St), optionally with another vinyl monomer, (which may be referred to below as a precursor polymer) to a ring structure-forming reaction.

Specifically, the production method of the present invention includes the steps of: continuously supplying a reactant to a tank reactor, the reactant comprising a monomer mixture and a radical polymerization initiator optionally with a chain transfer agent, the monomer mixture containing 51 to 98 mass% of methyl methacrylate, 1 to 48 mass% of α-methylstyrene, 1 to 48 mass% of styrene, and 0 to 20 mass% of another copolymerizable vinyl monomer; polymerizing the monomer mixture in the tank reactor until a polymerization conversion rate of 30 to 60 mass% is achieved to obtain a reaction product; removing the monomer mixture in the reaction product from the reaction product to obtain a precursor polymer; and subjecting the obtained precursor polymer to a ring structure-forming reaction. Each step can be carried out by a known technique.

The precursor polymer is a polymer obtained by polymerization using a reactant comprising a monomer mixture. Methyl methacrylate is present in an amount of 51 to 98 mass%, and preferably 55 to 95 mass%, in the monomer mixture. The reactant may further contain a radical polymerization initiator and a chain transfer agent. The monomer mixture contains α-methylstyrene in a proportion of 48 to 1 mass%, and preferably 40 to 3 mass%. The monomer mixture contains styrene in a proportion of 48 to 1 mass%, and preferably 40 to 3%. The monomer mixture contains one or more copolymerizable monomers in a proportion of 0 to 20 mass%, and preferably 0 to 10 mass%.

The copolymerizable monomers are not particularly limited and may be, for example, monomers corresponding to methacrylamide units represented by formula (A) and monomers corresponding to 2-(hydroxyalkyl)acrylate units represented by formula (B). Examples include vinyl monomers having only one polymerizable alkenyl group per molecule, for example, alkyl methacrylates other than methyl methacrylate, such as ethyl methacrylate and butyl methacrylate; aryl methacrylates such as phenyl methacrylate; cycloalkyl methacrylates such as cyclohexyl methacrylate and norbornenyl methacrylate; acrylic acid aryl esters such as phenyl acrylate; cycloalkyl acrylates such as cyclohexyl acrylate and norbornenyl acrylate; aromatic vinyl monomers; acrylamide; methacrylamide; acrylonitrile; and methacrylonitrile.

The monomer mixture preferably has a b* value of -1 to 2, and more preferably -0.5 to 1.5. The b* value within this range is advantageous because the resulting (meth)acrylic resin composition efficiently gives a molded article having little coloration. The b* value is a value measured in accordance with the International Commission on Illumination (CIE) standard (1976) or JIS Z 8722.

The monomer mixture removed from the reaction product in the step of removing the monomer mixture in the

reaction product can be recovered and used again in the present invention. If the b* value of the recovered monomer mixture becomes high due to heat added at the time of, for example, recovery, it is preferable to purify the monomer mixture by an appropriate method to bring the b* value to the above-mentioned range.

The polymerization initiator used in the present invention is not particularly limited as long as the polymerization initiator generates a reactive radical. Preferred examples include t-hexylperoxyisopropyl monocarbonate, t-hexylperoxy-2-ethylhexanoate, 1,1,3,3-tetramethylbutylperoxy-2-ethylhexanoate, t-butyl peroxypivalate, t-hexyl peroxypivalate, t-butyl peroxyneodecanoate, t-hexyl peroxyneodecanoate, 1,1,3,3-tetramethylbutylperoxyneodecanoate, 1,1-bis(t-hexylperoxy)cyclohexane, benzoyl peroxide, 3,5,5-trimethylhexanoyl peroxide, lauroyl peroxide, 2,2'-azobis(2-methylpropionitrile), 2,2'-azobis(2-methylbutyronitrile) and dimethyl 2,2'-azobis(2-methylpropionate); and t-hexylperoxy-2-ethylhexanoate, 1,1-bis(t-hexylperoxy)cyclohexane, and dimethyl 2,2'-azobis(2-methylpropionate).

The polymerization initiator used in the present invention preferably has an average uncleaved initiator concentration (I) of $5.1 \times 10^{-5}$ to $3.6 \times 10^{-4}$ (mol/L) at the polymerization temperature in the tank reactor described below.

The amount of the polymerization initiator to be used is adjusted according to the polymerization temperature, and the polymerization initiator is added to the monomer mixture to achieve the initiator concentration (I) described above.

Examples of chain transfer agents that can be used in the present invention include alkyl mercaptan compounds such as n-octyl mercaptan, n-dodecyl mercaptan, t-dodecyl mercaptan, 1,4-butanedithiol, 1,6-hexanedithiol, ethylene glycol bisthiopropionate, butanediol bisthioglycolate, butanediol bisthiopropionate, hexanediol bisthioglycolate, hexanediol bisthiopropionate, trimethylolpropane tris-(β-thiopropionate), and pentaerythritol tetrakisthiopropionate; and terpinolene.

Among these, monofunctional alkyl mercaptans such as n-octyl mercaptan and n-dodecyl mercaptan are preferable. These chain transfer agents can be used alone or in a combination of two or more. The amount of the chain transfer agent used is preferably 0 to 1 part by mass, more preferably 0.01 to 0.8 parts by mass, and still more preferably 0.02 to 0.6 parts by mass, based on 100 parts by mass of the monomer mixture.

In the bulk polymerization, no solvent is used in principle. However, when it is necessary, for example, to adjust the viscosity of the reaction liquid, a solvent may be incorporated into the monomer mixture. Preferable examples of solvents include aromatic hydrocarbons such as benzene, toluene, and ethylbenzene, and ketone compounds such as methyl ethyl ketone and methyl isobutyl ketone. These solvents can be used alone or in a combination of two or more. The amount of the solvent used is preferably 30 parts by mass or less, and more preferably 10 parts by mass or less, based on 100 parts by mass of the monomer mixture.

The reactant used in the present invention preferably has a dissolved oxygen content of 10 ppm or less, more preferably 5 ppm or less, even more preferably 4 ppm or less, and most preferably 3 ppm or less. When the dissolved oxygen content is within such a range, the polymerization reaction proceeds smoothly and it is easy to obtain a molded article free from silver streaks and coloration.

The temperature in the tank reactor, i.e., the temperature of the liquid in the reaction tank, is preferably 110 to 150°C, and more preferably 114 to 145°C. When the temperature is higher than this range, it is difficult to form a high molecular weight compound containing α-methylstyrene, which causes a decrease in heat resistance.

In the method for producing the methacrylic copolymer of the present invention, the water content in the reaction liquid in the tank reaction vessel is preferably 1000 ppm or less, more preferably 700 ppm or less, and even more preferably 280 ppm or less. When the water content is reduced to 1000 ppm or less, it is possible to suppress the formation of resin foreign matter with a size of several um to several tens of um during the polymerization reaction, and when the resulting methacrylic copolymer is melt-molded into a film or sheet, the generation of defects with an outer diameter of several um to several tens of um comprising resin foreign matter as the core can be significantly reduced.

In the tank reactor, the bulk polymerization is preferably carried out until a polymerization conversion rate of 30 to 60 mass%, preferably 35 to 55 mass%, is achieved.

The average residence time (θ) of the reaction material in the tank reactor is preferably 1.5 to 5 hours, more preferably 2 to 4.5 hours, and more preferably 2.5 to 4 hours. When the average residence time is 1.5 hours or longer, the required amount of polymerization initiator is not overly large, and polymerization reaction control and molecular weight control become easier. When the average residence time is 5 hours or less, the time required for the reaction to reach a steady state is within an appropriate range, and there is little concern about a decrease in productivity. The average residence time can be adjusted by the capacity of the tank reactor and the amount of the reactant supplied.

The bulk polymerization is preferably carried out in an inert gas atmosphere such as nitrogen gas.

The production method of the present invention comprises the step of removing a monomer mixture in the reaction product. Here, the reaction product is not limited to a reaction product obtained by bulk polymerization in a tank reactor, and may be a reaction product obtained in another reactor optionally connected downstream of the tank reactor, that is, a reaction product obtained by further polymerizing an unreacted monomer mixture in the reaction product obtained by bulk polymerization in the tank reactor in another reactor to increase the polymerization conversion rate. In this step, the solvent is also optionally removed at the same time. The removal method is not particularly limited, but a heating devolatilization method is preferable. Examples of the heating devolatilization method include equilibrium flash

evaporation and adiabatic flash evaporation, with adiabatic flash evaporation being preferred. The temperature at which the adiabatic flash evaporation method is performed is preferably 200 to 280°C, more preferably 220 to 280°C, and still more preferably 220 to 270°C. When the temperature at which the adiabatic flash evaporation method is performed is 200°C or higher, devolatilization can be sufficiently carried out, and appearance defects such as silver streaks are less likely to occur in the molded article. On the other hand, when the temperature at which the adiabatic flash evaporation method is performed is 280°C or lower, coloration and depolymerization reactions of the methacrylic copolymer due to oxidation, burning, decomposition, etc. are less likely to occur. The adiabatic flash evaporation method may be performed in multiple stages. In this case, the reaction product that flows through the heat transfer tube is heated by the vapor of the flash-evaporated monomer mixture, and the heated reaction product can be supplied into a low-pressure flash tank and flash-evaporated. The reaction product can be pressurized by a pump or other means. After the monomer mixture is removed, the methacrylic copolymer composition can be formed into pellets or granules according to a known method in order to facilitate handling as a molding material. The content of the monomer mixture in the obtained precursor polymer is preferably 1 mass% or less, and more preferably 0.5 mass% or less.

The lower limit of the glass transition temperature of the precursor polymer is preferably 115°C, more preferably 118°C, and even more preferably 120°C. The upper limit of the glass temperature is preferably 150°C. The glass transition temperature can be changed by adjusting, for example, the molecular weight, the amount of α-methylstyrene copolymerized, and the amount of styrene copolymerized. The higher the glass transition temperature of the methacrylic copolymer, the higher the heat resistance. The methacrylic copolymer obtained by using a precursor polymer having a high glass transition temperature has high heat resistance even when the amount of the structural unit (R) is small. Therefore, the methacrylic copolymer hardly causes deterioration of the saturated water absorption rate or the like.

The precursor polymer is not particularly limited as long as the total content of the structural units derived from methyl methacrylate is 50 to 98 mass%, the total content of the structural units derived from α-methylstyrene is 48 to 1 mass%, and the total content of the structural units derived from styrene is 48 to 1 mass%. From the viewpoint of polymerizability, transparency, etc., the total content of the structural units derived from methyl methacrylate in the methacrylic copolymer is preferably 50 mass% or more and 98 mass% or less, more preferably 55 mass% or more and 95 mass% or less, and most preferably 60 mass% or more and 90 mass% or less.

From the viewpoint of heat resistance, polymerizability, water absorption rate, etc., the total content of the structural units derived from α-methylstyrene in the precursor polymer is preferably 1 mass% or more and 48 mass% or less, more preferably 3 mass% or more and 40 mass% or less. When the content of the structural units derived from α-methylstyrene is 1 mass% or more, the obtained methacrylic copolymer has sufficient heat resistance. When the content of the structural units derived from α-methylstyrene is 48 mass% or less, the polymerizability does not decrease, which is preferable.

From the viewpoint of heat resistance, water absorption rate, thermal stability, etc., the total content of the structural unit derived from styrene in the precursor polymer is preferably 1 mass% or more and 48 mass% or less, and more preferably 3 mass% or more and 40 mass% or less. When the content of the structural unit derived from styrene is 1 mass% or more, a decrease in polymerization rate and a decrease in thermal decomposition resistance are less likely to occur. When the content of the structural unit derived from styrene is 48 mass% or less, the obtained methacrylic copolymer has a sufficient heat resistance.

In a chromatogram obtained by gel permeation chromatography, the precursor polymer preferably has a weight average molecular weight Mw, in terms of polystyrene, of 30,000 or more and 250,000 or less, more preferably 40,000 or more and 230,000 or less, and still more preferably 50,000 or more and 200,000 or less. When the weight average molecular weight Mw is 30,000 or more, the obtained molded article is less likely to be brittle, and when the weight average molecular weight Mw is 250,000 or less, good productivity is obtained, thus being preferable. The Mw can be controlled by adjusting the kinds, amounts, timing of addition, etc. of the polymerization initiator and/or chain transfer agent (optional components) used in the production of the precursor polymer.

The ring structure-forming reaction can be performed, for example, using an extruder. Examples of the extruder include single-screw extruders, twin-screw extruders, and multi-screw extruders. Twin-screw extruders are preferred from the viewpoint of mixing performance. Examples of twin-screw extruders include non-intermeshing co-rotating extruders, intermeshing co-rotating extruders, non-intermeshing counter-rotating extruders, and intermeshing counter-rotating extruders. The intermeshing co-rotating extruder is preferable because high-speed rotation is possible and mixing can be efficiently promoted. These extruders may be used alone or connected in series.

In the ring structure-forming reaction using an extruder, for example, the precursor polymer as a starting material is fed from a starting material feeding section of the extruder. After the precursor polymer is melted to fill the inside of a cylinder, an imidizing agent (optional component) and the like are injected into the extruder using an addition pump, such that the ring structure-forming reaction can be allowed to proceed in the extruder. When an imidizing agent is used, the structural unit (R) comprises an N-substituted or unsubstituted glutarimide unit and may optionally comprise an N-substituted or unsubstituted maleimide unit, a lactone ring unit and/or a glutaric anhydride unit. When no imidizing agent is used, the structural unit (R) is composed of a glutaric anhydride unit, or a lactone ring unit and a glutaric anhydride

unit. The imidizing agent is used in an amount of 1.6 to 30 parts by mass, preferably 2.0 to 20 parts by mass, based on 100 parts by mass of the methacrylic copolymer. When the imidizing agent is used in an amount within the above range, by-production of a methacrylamide unit can be suppressed.

The resin temperature in the reaction zone in the extruder is preferably set in the range of 180 to 280°C, and more preferably in the range of 200 to 280°C. When the resin temperature in the reaction zone is lower than 180°C, the heat resistance of the methacrylic copolymer tends to decrease due to a decrease in reaction efficiency of the ring structure-forming reaction, by-production of a methacrylamide unit, and the like. When the resin temperature in the reaction zone is 180°C or higher, a decrease in heat resistance of the methacrylic copolymer due to a decrease in reaction efficiency of the ring structure-forming reaction, by-production of a methacrylamide unit, and the like are less likely to occur. When the resin temperature in the reaction zone is 280°C or lower, decomposition of the resin is suppressed, and molded articles, films including optical film, laminates, and the like formed of the obtained methacrylic copolymer are unlikely to have reduced mechanical strength such as low tensile strength at break. Note that the reaction zone in the extruder refers to a region from an injection position for injecting an imidizing agent or the like to a resin discharge port (die portion) in the cylinder of the extruder.

The ring structure-forming reaction can be allowed to further proceed by increasing the reaction time in the reaction zone of the extruder. The reaction time in the reaction zone of the extruder is preferably longer than 10 seconds, more preferably longer than 30 seconds. When the reaction time is 10 seconds or shorter, the ring structure-forming reaction may hardly proceed.

The resin pressure in the extruder is preferably in the range of atmospheric pressure to 50 MPa, and more preferably in the range of 1 to 30 MPa. A pressure of 50 MPa or higher exceeds the limit of the mechanical pressure resistance of an ordinary extruder and requires a special device, which is not cost-effective.

It is preferable to use an extruder having a vent hole capable of reducing the pressure to atmospheric pressure or lower. With this configuration, unreacted materials such as monomers and/or by-products such as methanol can be removed, and the heat resistance of the molded article containing the methacrylic copolymer of the present invention tends to be improved.

For the ring structure-forming reaction, in place of an extruder, a reactor for high viscosity, for example, a horizontal twin-screw reaction apparatus such as Vyborac produced by Sumitomo Heavy Industries, Ltd. or a vertical twin-screw stirring tank, such as Super Blend, can also be suitably used.

During the ring structure-forming reaction, a carboxyl group may be by-produced in the methacrylic copolymer. The carboxy group may be optionally converted into an ester group by, for example, an esterifying agent and/or a catalyst. This can reduce foaming of the resin during the production of optical film. The ester group may vary depending on the esterifying agent and/or catalyst used but preferably contains a methyl methacrylate unit from the viewpoint of reduction in resin melt viscosity during melt molding, reactivity of esterification, and heat resistance of the resin after esterification. The esterifying agent is preferably dimethyl carbonate from the viewpoint of cost, reactivity, etc.

The amount of the esterifying agent can be, for example, set so that the methacrylic copolymer has a desired acid value.

In addition to the esterifying agent, a catalyst can be used together. The type of catalyst is not particularly limited, and examples include amine compounds such as trimethylamine, triethylamine, monomethyldiethylamine, dimethylmonoethylamine, and dimethylbenzylamine. Among these, triethylamine is preferable from the viewpoint of cost, reactivity, etc.

## Methacrylic Resin Composition

The methacrylic resin composition of the present invention contains a methacrylic copolymer (A) and a methacrylic resin (P). The content of the methacrylic copolymer (A) in the methacrylic resin composition is 20 to 100 mass%, preferably 25 to 100 mass%, and more preferably 30 to 100 mass%. Due to the content of the methacrylic copolymer (A) within the range of 20 to 100 mass%, the methacrylic resin composition of the present invention has an excellent balance between heat resistance and fluidity.

The content of the methacrylic resin (P) in the methacrylic resin composition is 0 to 80 mass%, preferably 0 to 75 mass%, and more preferably 0 to 70 mass%. A content of the methacrylic resin (P) falling within the range of 0 to 80 mass% makes the methacrylic resin composition of the present invention excellent in balance between heat resistance and fluidity.

The methacrylic resin (P) used in the present invention has a proportion of the structural unit derived from a methacrylic ester of 80 mass% or more, preferably 90 mass% or more, more preferably 95 mass% or more, and still more preferably 99 mass% or more. Examples of methacrylic esters include methyl methacrylate, ethyl methacrylate, n-propyl methacrylate, isopropyl methacrylate, n-butyl methacrylate, isobutyl methacrylate, s-butyl methacrylate, t-butyl methacrylate, amyl methacrylate, isoamyl methacrylate, n-hexyl methacrylate, 2-ethylhexyl methacrylate, pentadecyl methacrylate, dodecyl methacrylate; phenyl methacrylate, benzyl methacrylate, phenoxyethyl methacrylate, 2-hydroxyethyl methacrylate, 2-ethoxyethyl methacrylate, glycidyl methacrylate, allyl methacrylate; cyclohexyl methacrylate, norbornenyl methacrylate, and isobornyl methacrylate, with methyl methacrylate being preferred. These methacrylic esters may be used singly or in a combination of two or more kinds. Further, the methacrylic resin (P) may contain a structural unit derived from a monomer other than methacrylic esters. Such another monomer is preferably an acrylic ester. The content of the structural unit derived from an acrylic ester in the methacrylic resin (P) is preferably 20 mass% or less, more preferably 10 mass% or less, still more preferably 5 mass% or less, and most preferably 1.0 mass% or less.

Examples of such acrylic esters include methyl acrylate ("MA" below), ethyl acrylate, n-propyl acrylate, isopropyl acrylate, n-butyl acrylate, isobutyl acrylate, tert-butyl acrylate, hexyl acrylate, 2-ethylhexyl acrylate, nonyl acrylate, decyl acrylate, dodecyl acrylate, stearyl acrylate, 2-hydroxyethyl acrylate, 2-hydroxypropyl acrylate, 4-hydroxybutyl acrylate, cyclohexyl acrylate, 2-methoxyethyl acrylate, 3-methoxybutyl acrylate, trifluoromethyl acrylate, trifluoroethyl acrylate, pentafluoroethyl acrylate, glycidyl acrylate, allyl acrylate, phenyl acrylate, toluyl acrylate, benzyl acrylate, isobornyl acrylate, and 3-dimethylaminoethyl acrylate. From the viewpoint of availability, MA, ethyl acrylate, n-propyl acrylate, isopropyl acrylate, n-butyl acrylate, isobutyl acrylate, and tert-butyl acrylate are preferable, MA and ethyl acrylate are more preferable, and MA is most preferable. These acrylic esters may be used singly or in a combination of two or more kinds.

The methacrylic resin (P) can be obtained by polymerizing the above-mentioned methacrylic ester and optional one or more other monomers. For the polymerization performed by using two or more monomers, a monomer mixture is typically prepared by mixing the two or more monomers, and the monomer mixtur is subjected to polymerization. The polymerization method is not particularly limited. From the viewpoint of productivity, radical polymerization is preferably performed according to a method such as bulk polymerization, suspension polymerization, solution polymerization, or emulsion polymerization.

The methacrylic resin (P) preferably has a weight average molecular weight ("Mw" below) of 40,000 to 400,000, more preferably 45,000 to 200,000, and still more preferably 50,000 to 150,000. Due to the methacrylic resin (P) having a weight average molecular weight of 40,000 or more, the methacrylic resin composition of the present invention becomes excellent in mechanical strength; due to the methacrylic resin (P) having a weight average molecular weight of 400,000 or less, the methacrylic resin composition of the present invention becomes excellent in fluidity with enhanced moldability.

The glass transition temperature of the methacrylic resin (P) is preferably 100°C or higher, more preferably 103°C or higher, and still more preferably 105°C or higher. Due to a glass transition temperature of 100°C or higher, the methacrylic resin composition of the present invention is excellent in heat resistance. The term "glass transition temperature" in the present specification refers to a temperature determined based on measurement at a heating rate of 10°C/min with a differential scanning calorimeter and calculation according to the midpoint method.

The saturated water absorption rate of the methacrylic resin (P) in water at 23°C is preferably 2.5 mass% or less, more preferably 2.3 mass% or less, and still more preferably 2.1 mass% or less. A saturated water absorption rate of 2.5 mass% or less makes the methacrylic resin composition of the present invention excellent in moisture resistance and limits a dimensional change caused by moisture absorption. The term "saturated water absorption rate" in the present specification refers to a value determined from an increase in mass in comparison between the mass of a molded article dried in vacuum for at least 3 days and the mass of the molded article at the point when equilibrium is reached while the molded article is immersed in distilled water at 23°C and measured over time.

The melt flow rate ("MFR" below) of the methacrylic resin (P) is preferably in the range of 1 to 30 g/10 minutes. The lower limit of the MFR is more preferably 1.2 g/10 minutes or more, and still more preferably 1.5 g/10 minutes. The upper limit of the MFR is more preferably 25 g/10 minutes or less, and still more preferably 22 g/10 minutes or less. An MFR within the range of 1 to 30 g/10 minutes makes heat-melt molding stable. The term "MFR" in the present specification refers to a value measured at a temperature of 230°C under a load of 3.8 kg with a melt indexer in accordance with JIS K 7210.

The methacrylic resin composition of the present invention has a mass ratio of methacrylic copolymer (A)/methacrylic resin (P) of 100/0 to 20/80, preferably 100/0 to 25/75, and more preferably 100/0 to 30/70 from the viewpoint of heat resistance and fluidity.

The methacrylic resin composition of the present invention has a glass transition temperature of preferably 115 to 170°C, more preferably 120 to 165°C, and still more preferably 125 to 160°C. A glass transition temperature of 115°C or higher poses little concern about a decrease in heat resistance, and a glass transition temperature of 170°C or lower poses little concern about a decrease in moldability.

The melt flow rate of the methacrylic resin composition of the present invention at 230°C under a load of 3.8 kg is preferably 2.0 g/10 minutes or more, more preferably 2.5 to 20 g/10 minutes, and still more preferably 3.0 to 10 g/10 minutes. The melt flow rate is a value of a melt mass flow rate measured in accordance with JIS K 7210.

The methacrylic resin composition of the present invention has a saturated water absorption rate of 2.5% or less, more preferably 2.3% or less, and still more preferably 2.1% or less as measured under the same conditions as those for measurement of the saturated water absorption rate of the methacrylic copolymer (A). A saturated water absorption rate of 2.5% or less achieves excellent dimensional stability at high humidity.

When being formed into a molded article with a thickness of 3 mm, the methacrylic resin composition of the

present invention has a total light transmittance of preferably 90.0% or more, more preferably 90.5% or more, and still more preferably 91.0% or more as measured according to the method specified in JIS K 7361-1. A molded article with a total light transmittance of 90.0% or more has excellent transparency.

When being formed into a molded article, the methacrylic resin composition of the present invention has a haze of preferably 5.0% or less, more preferably 4.5% or less, and still more preferably 4.0% or less as measured according to the method specified in JIS K 7136. A molded article with a haze of 5.0% or less has excellent transparency.

The methacrylic resin composition of the present invention may optionally contain a filler as long as the effects of the present invention are not impaired. Examples of fillers include calcium carbonate, talc, carbon black, titanium oxide, silica, clay, barium sulfate, and magnesium carbonate. The amount of the filler to be contained in the resin composition of the present invention is preferably 3 mass% or less, and more preferably 1.5 mass% or less.

The methacrylic resin composition of the present invention may contain other polymers as long as the effects of the present invention are not impaired. Examples of other polymers include polyolefin resins, such as polyethylene, polypropylene, polybutene-1, poly-4-methylpentene-1, and polynorbornene; ethylene ionomers; styrene resins, such as polystyrene, styrene-maleic anhydride copolymers, high-impact polystyrene, AS resin, ABS resin, AES resin, AAS resin, ACS resin, and MBS resin; methyl methacrylate-styrene copolymers; polyester resins, such as polyethylene terephthalate and polybutylene terephthalate; polyamides, such as nylon 6, nylon 66, and polyamide elastomers; polyvinyl chloride, polyvinylidene chloride, polyvinyl alcohol, ethylene-vinyl alcohol copolymers, polyacetal, polyvinylidene fluoride, polyurethane, phenoxy resins, modified polyphenylene ether, polyphenylene sulfide, silicone-modified resins; silicone rubbers; acrylic multilayer copolymer elastomers; acrylic thermoplastic elastomers, such as diblock copolymers and triblock copolymers of a methyl methacrylate polymer block-n-butyl acrylate polymer block; styrene thermoplastic elastomers, such as SEPS, SEBS, and SIS; and olefin rubbers, such as IR, EPR, and EPDM. The amount of such other polymers that can be contained in the methacrylic resin composition of the present invention is preferably 10 mass% or less, more preferably 5 mass% or less, and most preferably 0 mass%.

The methacrylic resin composition of the present invention may contain additives, such as an antioxidant, a thermal degradation inhibitor, an UV absorber, a light stabilizer, a lubricant, a mold release agent, a polymer processing aid, an antistatic agent, a flame retardant, a pigment, a light diffuser, an organic dye, a delusterant, and a phosphor, as long as the effects of the present invention are not impaired.

An antioxidant alone has an effect of preventing oxidative deterioration of resin in the presence of oxygen. Examples include phosphorus antioxidants, hindered phenolic antioxidants, and thioether antioxidants. These antioxidants may be used singly or in a combination of two or more. Of these, phosphorus antioxidants and/or hindered phenolic antioxidants are preferable, and a combination of a phosphorus antioxidant and a hindered phenolic antioxidant is more preferable, from the viewpoint of the effect of preventing deterioration of optical properties due to coloration. The ratio of a phosphorus antioxidant to a hindered phenolic antioxidant used in combination is preferably, but not limited to, in the range of 1/5 to 2/1, and more preferably in the range of 1/2 to 1/1 in terms of the phosphorus antioxidant/the hindered phenolic antioxidant in ratio by mass.

Examples of phosphorus antioxidants include 2,2-methylenebis(4,6-di-t-butylphenyl)octyl-phosphite (trade name: ADK STAB HP-10, produced by Adeka Corporation), tris(2,4-di-t-butylphenyl)phosphite (trade name: Irgafos 168, produced by Ciba Specialty Chemicals), and 3,9-bis(2,6-di-tert-butyl-4-methylphenoxy)-2,4,8,10-tetraoxa-3,9-diphosphaspiro[5.5] undecane (trade name: ADK STAB PEP-36, produced by Adeka Corporation).

Examples of hindered phenolic antioxidants include pentaerythrityl-tetrakis[3-(3,5-di-t-butyl-4-hydroxyphenyl)propionate] (trade name: Irganox 1010, produced by Ciba Specialty Chemicals) and octadecyl-3-(3,5-di-t-butyl-4-hydroxyphenyl)propionate (trade name: Irganox 1076, produced by Ciba Specialty Chemicals).

Thermal degradation inhibitors are compounds that can prevent thermal degradation of resin by trapping polymer radicals generated upon exposure to high heat in a substantially oxygen-free state. Examples of thermal degradation inhibitors include 2-t-butyl-6-(3'-t-butyl-5'-methyl-hydroxybenzyl)-4-methylphenyl acrylate (trade name: Sumilizer GM, produced by Sumitomo Chemical Co., Ltd.), 2,4-di-t-amyl-6-(3',5'-di-t-amyl-2'-hydroxy-$\alpha$-methylbenzyl)phenyl acrylate (trade name: Sumilizer GS, produced by Sumitomo Chemical Co., Ltd.), 4-t-butyl-2-(5-t-butyl-2-oxo-3H-benzofuran-3-yl)phenyl-3,5-di-t-butyl-4-hydroxybenzoate (trade name: Revonox 501, produced by Chitec Technology Co., Ltd.), 5,7-di-t-butyl-3-(3,4-dimethylphenyl)-3H-benzofuran-2-one, and 5,7-di-t-butyl-3-(3,4-dipropylphenyl)-3H-benzofuran-2-one (trade name: HP-136, produced by BASF).

UV absorbers are compounds having the ability to absorb ultraviolet rays. UV absorbers are compounds that are said to have the function of mainly converting light energy into heat energy.

Examples of UV absorbers include benzophenone compounds, benzotriazole compounds, triazine compounds, benzoate compounds, salicylate compounds, cyanoacrylate compounds, oxalic anilide compounds, malonic ester compounds, and formamidine compounds. These may be used singly or in a combination of two or more. Of these, benzotriazole compounds, triazine compounds, or UV absorbers having a maximum value $\varepsilon_{max}$ of the molar absorbance coefficient of 1200 $dm^3 \cdot mol^{-1}$ $cm^{-1}$ or less at a wavelength of 380 to 450 nm are preferable. The light stabilizer is referred to as a compound mainly with functionality of capturing radicals that form due to oxidation by light, and examples include

hindered amine compounds, such as compounds having a 2,2,6,6-tetraalkylpiperidine skeleton.

Examples of lubricants include stearic acid, behenic acid, stearic acid amide, methylene bisstearamide, hydroxystearic acid triglyceride, paraffin wax, ketone wax, octyl alcohol, and hydrogenated oil.

The mold release agent is a compound with functionality of facilitating the release of a molded article from a mold. Examples include higher alcohol compounds, such as cetyl alcohol and stearyl alcohol; and glycerin esters of higher fatty acid, such as stearic acid monoglyceride and stearic acid diglyceride. The mold release agent for use is preferably a higher alcohol compound because a glycerin ester of higher fatty acid may cause the formation of gelled foreign matter.

Polymer processing aids are compounds that are effective in achieving thickness accuracy and thinness of the obtained film when an acrylic resin composition is molded. Polymer processing aids can usually be produced by performing emulsion polymerization. Polymer processing aids are preferably polymer particles with a particle size of 0.05 to 0.5 μm.

The polymer particles may be single-layer particles comprising a polymer with a single composition ratio and a single intrinsic viscosity, or may be multilayer particles comprising two or more polymers that are different in composition ratio or intrinsic viscosity. Among them, preferred are particles having a two-layered structure composed of a polymer layer with a low intrinsic viscosity as an inner layer and a polymer layer with a high intrinsic viscosity of 5 dl/g or more as an outer layer. The polymer processing aid preferably has an intrinsic viscosity of 3 to 6 dl/g. An intrinsic viscosity of 3 dl/g or more leads to an enhanced effect of improving moldability. An intrinsic viscosity of 6 dl/g or less poses little concern about a decrease in melt fluidity of the acrylic resin composition.

Examples of antistatic agents include alkylsulfonates, such as sodium heptylsulfonate, sodium octylsulfonate, sodium nonylsulfonate, sodium decylsulfonate, sodium dodecylsulfonate, sodium cetylsulfonate, sodium octadecylsulfonate, sodium diheptylsulfonate, potassium heptylsulfonate, potassium octylsulfonate, potassium nonylsulfonate, potassium decylsulfonate, potassium dodecylsulfonate, potassium cetylsulfonate, potassium octadecylsulfonate, potassium diheptylsulfonate, lithium heptylsulfonate, lithium octylsulfonate, lithium nonylsulfonate, lithium decylsulfonate, lithium dodecylsulfonate, lithium cetylsulfonate, lithium octadecylsulfonate, and lithium diheptylsulfonate.

Examples of flame retardants include magnesium hydroxide, aluminum hydroxide, hydrated aluminum silicate, hydrated magnesium silicate, metal hydrates with hydroxy groups or water of crystallization, such as hydrotalcite, phosphoric compounds, such as amine polyphosphate and phosphate, and silicon compounds. Phosphate flame retardants such as the following are preferred: trimethyl phosphate, triethyl phosphate, tripropyl phosphate, tributyl phosphate, tripentyl phosphate, trihexyl phosphate, tricyclohexyl phosphate, triphenyl phosphate, tricresyl phosphate, trixylenyl phosphate, dimethylethyl phosphate, methyl dibutyl phosphate, ethyl dipropyl phosphate, and hydroxyphenyl diphenyl phosphate.

Examples of dyes or pigments include organic red pigments, such as para red, fire red, pyrazolone red, thioindigo red, and perylene red; organic blue pigments, such as cyanine blue and indanthrene blue; and organic green pigments, such as cyanine green and naphthol green. One, or two or more of these may be used.

Organic dyes that can be preferably used are compounds having the function of converting ultraviolet rays into visible rays.

Examples of light diffusers or delusterants include glass particles, polysiloxane crosslinked particles, crosslinked polymer particles, talc, calcium carbonate, and barium sulfate.

Examples of phosphors include fluorescent pigments, fluorescent dyes, fluorescent whitening dyes, fluorescent brightening agents, and fluorescent bleaching agents.

These additives may be used singly or in a combination of two or more. These additives may be added to the polymerization reaction liquid during the production of the methacrylic copolymer (A) or the methacrylic resin (P), may be added to the produced methacrylic copolymer (A) or methacrylic resin (P), or may be added during the preparation of the methacrylic resin composition of the present invention. The total amount of the additives contained in the methacrylic resin composition of the present invention is preferably 7 mass% or less, more preferably 5 mass% or less, and still more preferably 4 mass% or less of the methacrylic resin composition from the viewpoint of preventing poor appearance of a molded article.

The method for preparing the methacrylic resin composition of the present invention is not particularly limited. For example, a method of melt-kneading the methacrylic copolymer (A) and the methacrylic resin (P) may be used. During melt-kneading, other polymers and/or additives may be optionally mixed; the methacrylic copolymer (A) may be first mixed with other polymers and additives and then mixed with the methacrylic resin (P); the methacrylic resin (P) may be first mixed with other polymers and additives and then mixed with the methacrylic copolymer (A); or other methods may be used. Kneading can be performed with a known mixing apparatus or kneading apparatus such as a kneader-ruder, an extruder, a mixing roll, or a Banbury mixer. Of these, a twin-screw extruder is preferred.

The methacrylic resin composition of the present invention may be prepared in the form of pellets for increasing convenience during storage, transportation, or molding.

Molded Article

The molded article of the present invention is formed from the methacrylic resin composition of the present invention. The method for producing the molded article of the present invention is not particularly limited. Examples include melt molding methods such as a T-die method (a lamination method, a coextrusion method, etc.), inflation method (a coextrusion method, etc.), a compression molding method, a blow molding method, a calender molding method, a vacuum molding method, an injection molding method (an insert method, a double molding method, a press method, a core-back method, a sandwich method, etc.), and a solution casting method. Of these, the T-die method, inflation method, and injection molding method are preferable from the viewpoint of high productivity and cost. The type of the molded article is not limited, but is preferably a film (a planar molded article with a thickness of 5 um or more and 250 um or less) or a sheet (a planar molded article with a thickness of more than 250 μm).

A laminate can be obtained by stacking a layer containing the methacrylic resin composition of the present invention and another material (e.g., a layer containing another thermoplastic copolymer). Examples of other materials used for such laminates include steel, plastics (e.g., other thermoplastic resins), wood, and glass. The laminate obtained by the present invention can be suitably used in wallpaper, surfaces of automotive interior components; surfaces of automotive exterior components, such as bumpers, surfaces of mobile phones, surfaces of furniture, surfaces of personal computers, surfaces of vending machines, and surfaces of bathroom components, such as bathtubs.

Examples of other thermoplastic resins used in the layer containing such other thermoplastic copolymers include olefin resins, such as methacrylic resin, polycarbonate, polyethylene, polypropylene, polybutene-1, poly-4-methylpentene-1, and polynorbornene; ethylene ionomers; styrene resins, such as polystyrene, styrene-maleic anhydride copolymers, high-impact polystyrene, AS resin, ABS resin, AES resin, AAS resin, ACS resin, and MBS resin; methyl methacrylate-styrene copolymers; ester resins, such as polyethylene terephthalate and polybutylene terephthalate; amide resins, such as nylon 6, nylon 66, and polyamide elastomers; polyphenylene sulfide, polyether ether ketone, polysulfone, polyphenylene oxide, polyimide, polyetherimide, polyvinyl chloride, polyvinylidene chloride, polyvinylidene fluoride, polyvinyl alcohol, ethylene-vinyl alcohol copolymers, polyacetal, and phenoxy resins. Methacrylic resin and polycarbonate are preferable, and polycarbonate is more preferable.

A laminate including a layer containing the methacrylic resin composition of the present invention and a layer containing a polycarbonate resin, which is an embodiment of the laminate described above, has a high level of transparency and a limited degree of warpage at high temperature and high humidity. Thus, the laminate is suitable for optical applications, and is particularly suitable for liquid crystal protection plates, surface materials of portable digital assistants, display window protection plates of portable digital assistants, and front plates of various displays. Due to its high level of transparency and heat resistance, the laminate of the present invention can be used in decorative sheets, metal-decorative sheets, vehicle glazing, machine tool covers, security sheets, and shatterproof sheets, in addition to optical applications.

If a laminate including a layer containing the methacrylic resin composition of the present invention and a layer containing a polycarbonate resin, which is an embodiment of the laminate, is used in the front plate of various displays, the layer containing the methacrylic resin composition of the present invention may be stacked on only one side or on both sides of the layer containing the polycarbonate resin. The layer containing the methacrylic resin composition preferably has a thickness in a range of 2 to 15%, more preferably 3 to 12%, and still more preferably 4 to 10% of the thickness of the laminate.

Examples

The present invention will be described in more detail with reference to Examples. However, the present invention is not limited to the Examples.

Physical properties were measured according to the following methods.

Polymerization Conversion Rate

A column, InertCap 1 (df = 0.4 um, 0.25 mml. D. × 60 m; produced by GL Sciences Inc.), was connected to a GC-14A gas chromatograph (produced by Shimadzu Corporation) to perform analysis under the following conditions, and calculation was performed based on the analysis.

Injection temperature = 250°C
Detector temperature = 250°C
Temperature conditions: the temperature is kept at 60°C for 5 minutes → raised at 10°C/min to 250°C → kept at 250°C for 10 minutes

Unit Composition of Methacrylic Copolymer

The carbon ratio of the phenyl group in the α-methylstyrene unit, the carbonyl group in the methyl methacrylate unit, and the phenyl group in the styrene unit was determined by $^{13}C$ NMR, and the unit composition was calculated based on the carbon ratio.

Weight Average Molecular Weight

The weight average molecular weight (Mw) of the resins obtained in the Production Examples was determined by GPC (gas chromatography). 4 mg of a resin to be measured was dissolved in 5 ml of tetrahydrofuran to prepare a sample solution. The temperature of the column oven was set to 40°C, and 20 μl of the sample solution was injected into an apparatus at an eluent flow rate of 0.35 ml/min to obtain the chromatogram. Ten polystyrene standards each having a different molecular weight in the range of 400 to 5,000,000 were measured by GPC, and a calibration curve showing the relationship between the retention time and the molecular weight was prepared. The Mw of the resin subjected to measurement was determined according to this calibration curve. The value corresponding to the molecular weight of standard polystyrene determined from the chromatogram measured by GPC (gel permeation chromatography) was defined as the molecular weight of the copolymer.

Apparatus: HLC-8320 GPC apparatus produced by Tosoh Corporation Separation column: serially connected TSK guard column Super HZ-H, TSKgel HZM-M, and TSKgel Super HZ4000 produced by Tosoh Corporation

Eluent: tetrahydrofuran
Eluent flow rate: 0.35 mL/min
Column temperature: 40°C
Detection method: differential refractive index (RI)

Glass Transition Temperature Tg

A DSC curve was measured with a differential scanning calorimeter (DSC-50, model number, produced by Shimadzu Corporation) in accordance with JIS K 7121 under conditions in which the resins obtained in the Production Examples, Examples, and Comparative Examples were heated to 250°C and then cooled to room temperature, and then heated from room temperature to 200°C at 10°C/min. The glass transition temperature at the midpoint determined from the DSC curve, measured at the time of the second temperature rise, was defined as the glass transition temperature in the present invention. When two or more midpoint glass transition temperatures were present, the average value of the determined two or more midpoint glass transition temperatures was defined as the glass transition temperature in the present invention.

1% Thermogravimetric Loss Temperature

The resins obtained in the Production Examples, Examples, and Comparative Examples were heated at 10°C/min in a nitrogen atmosphere with a thermogravimetric analyzer (TGA-50, produced by Shimadzu Corporation), and the temperature at which 1% weight was lost was defined as the 1% thermogravimetric loss temperature.

Flexural Modulus

The resins obtained in the Production Examples, Examples, and Comparative Examples were injection-molded with an injection molder (M-100C produced by Meiki Co., Ltd.) at a cylinder temperature of 250°C, a mold temperature of 50°C, and an injection speed of 50 mm/sec, thereby obtaining rectangular specimens having a thickness of 4 mm, a long side of 80 mm, and a short side of 10 mm. The obtained specimens were measured for flexural modulus according to the method specified in JIS K 7171 with a precision universal tester (Autograph AG-IS 5kN, produced by Shimadzu Corporation).

Saturated Water Absorption Rate

The resins obtained in Production Examples, Examples, and Comparative Examples were injection-molded with an injection molder (M-100C produced by Meiki Co., Ltd.) at a cylinder temperature of 250°C, a mold temperature of 50°C, and an injection speed of 50 mm/sec, thereby obtaining square specimens having a thickness of 3 mm and a side of 50 mm. The specimens were vacuum-dried at 80°C and at 5 mmHg for 24 hours. The specimens were then allowed to cool in a desiccator. Immediately after each specimen was taken out from the desiccator, the mass (initial

mass) was measured. Subsequently, the specimens were then immersed in distilled water at 23°C. The specimens were then taken out of the water, and water on the surface was wiped off, followed by measuring the mass. Immersion in distilled water and mass measurement were repeated until no change in mass was observed. The saturated water absorption rate was calculated according to the following equation from the mass at the point in time when no change in mass was observed (mass after water absorption) and the initial mass.

$$\text{Saturated water absorption rate (\%)} = [(\text{mass after water absorption} - \text{initial mass})/\text{initial mass}] \times 100$$

Melt Flow Rate (MFR)

The resins obtained in the Production Examples, Examples, and Comparative Examples were measured in accordance with JIS K 7210 at 230°C under a load of 3.8 kg for 10 minutes.

Unit Composition of Methacrylic Copolymer

The $\alpha$-methylstyrene unit and the styrene unit had the same composition as each unit composition of the precursor polymer. $^1$H-NMR measurement of the methacrylic copolymers was performed by using a $^1$H-NMR (trade name: UltraShield 400 Plus, produced by Bruker Corporation) to determine the content (mol%) of each monomer unit such as the glutarimide unit, methyl methacrylate unit, and aromatic vinyl ($\alpha$-methylstyrene and styrene) unit in the methacrylic copolymers, and the content by mol% was converted into the content by wt% based on the molecular weight of each monomer unit. The ratio of the methacrylic acid unit to the methyl methacrylate unit in the methacrylic copolymers was determined from the absorption intensity of the peak derived from the carbonyl of the methyl methacrylate unit around 1685 $cm^{-1}$ and the absorption intensity of the peak derived from the carboxylic acid of the methacrylic acid unit around 3250 $cm^{-1}$ by using an infrared spectrophotometer. The content of the methacrylic acid unit was determined from this ratio and the content of the methyl methacrylate unit determined by $^1$H-NMR. When the methacrylic copolymer contains a methacrylic acid unit, the content of the methyl methacrylate unit was determined by subtracting the content of methacrylic acid from the content of the methyl methacrylate unit determined by $^1$H-NMR.

Transparency

The resin compositions obtained in the Examples and Comparative Examples were injection-molded with an injection molder (M-100C produced by Meiki Co., Ltd.) at a cylinder temperature of 250°C, a mold temperature of 50°C, and an injection speed of 50 mm/sec, thereby obtaining square injection-molded specimens having a thickness of 3 mm and a side of 50 mm. The obtained injection-molded specimens were measured for haze according to the method specified in JIS K 7136. The following evaluation was performed according to the obtained haze values.
Excellent: the haze is 5% or less
Good: the haze is 5% or more and less than 10%
Fair: the haze is 10% or more and less than 20%
Poor: the haze is 20% or more

Surface Hardness

The resin compositions obtained in Examples and Comparative Examples were injection-molded with an injection molder (M-100C produced by Meiki Co., Ltd.) at a cylinder temperature of 250°C, a mold temperature of 50°C, and an injection speed of 50 mm/sec, thereby obtaining square injection-molded specimens having a thickness of 3 mm and a side of 50 mm.
With a table-moving pencil scratch hardness tester (model P, produced by Toyo Seiki Seisaku-sho, Ltd.), the lead of a pencil was pressed against one of the surfaces of an injection-molded specimen at an angle of 45° under a load of 750 g to examine whether a scratch was made. The hardness of the lead of the pencil was gradually increased, and the hardness of the lead that was one level softer than that of the lead with which a scratch was formed was determined to be the "pencil scratch hardness."
Excellent: Pencil hardness is 3H or higher

Good: pencil hardness is 2H
Fair: pencil hardness is H
Poor: Pencil hardness is lower than H

Moldability

The resin compositions obtained in the Examples and Comparative Examples were injection-molded with an injection molder (M-100C, produced by Meiki Co., Ltd.) at a cylinder temperature of 280°C, a mold temperature of 75°C, and a molding cycle of 1 minute, thereby producing flat plates having a length of 205 mm, a width of 160 mm, and a thickness of 0.5 mm. The ratio of resin flow length (190 mm) to thickness was 380.

The appearance of the plates was visually observed. Moldability was evaluated based on whether the plates had defects such as sink marks due to insufficient fluidity and/or silver marks due to insufficient thermal decomposition resistance.

Excellent: the molded article has no sink marks and no silver marks.
Fair: the molded article has a few sink marks or silver marks.
Poor: the molded article has sink marks or silver marks.

Dimensional Stability

The resin compositions obtained in the Examples and Comparative Examples were press-molded to prepare flat plates having a length of 205 mm, a width of 160 mm, and a thickness of 0.5 mm. The flat plates were each placed in (1) a thermostat at a temperature of 60°C and a relative humidity of 90% and (2) a thermostat at a temperature of 90°C and a relative humidity of 60%, and left in the atmosphere for 500 hours. The plates were removed from the thermostat and measured for dimension in the longitudinal direction. The change in dimension in the longitudinal direction of the plates from that measured before the plates were placed in the thermostat was calculated to evaluate the dimensional stability.

Excellent: the change in dimension is 0.3% or less under both conditions (1) and (2).
Fair: the change in dimension is 0.3% or less under either condition (1) or (2).
Poor: the change in dimension is greater than 0.3% under both conditions (1) and (2).

List of Materials

For the methacrylic resin (P) of the present invention, the following materials were used.

Methacrylic Resin (P-1): Parapet produced by Kuraray Co., Ltd. (Mw = 80,000, MMA copolymerization ratio = 100%, MA copolymerization ratio = 0%, Tg = 120°C, saturated water absorption rate = 2.1%, MFR = 2.6 g/10 min)
Methacrylic Resin (P-2): Parapet produced by Kuraray Co., Ltd. (Mw = 70,000, MMA copolymerization ratio = 95.5%, MA copolymerization ratio = 4.5%, Tg = 109°C, saturated water absorption rate = 2.0%, MFR = 10.5 g/min)

Production Example: Precursor Polymer

Production Examples 1 to 9

Precursor polymers a-1 to a-8 of the Production Examples of the present invention were produced according to the following method.

Precursor Polymers a-1 to a-8

Purified methyl methacrylate (MMA), α-methylstyrene (aMSt), styrene (St), 2,2'-azobis(2-methylpropionitrile) (AIBN), and n-octylmercaptan (n-OM) were placed in an autoclave equipped with a stirrer in the proportions shown in Table 1 and uniformly dissolved, thereby obtaining a raw material for polymerization. Nitrogen gas was blown into the reactant to remove dissolved oxygen up to 3 ppm. Subsequently, a continuous-flow tank reactor equipped with a brine-cooling condenser was purged with nitrogen gas. The raw material for polymerization was continuously supplied to the tank reactor at a constant flow rate such that the average residence time θ was as shown in Table 1 to perform bulk polymerization at a polymerization temperature shown in Table 1, and a liquid containing a methacrylic copolymer was

continuously extracted from the tank reactor. The pressure in the tank reactor was controlled by a pressure regulation valve connected to the brine-cooling condenser. The polymerization conversion rate resulted as shown in Table 1. Subsequently, the liquid discharged from the reactor was heated to 230°C and supplied to a twin-screw extruder controlled to 240°C. In the twin-screw extruder, a volatile component containing unreacted monomers as a main component was separated and removed, and the methacrylic copolymer was extruded as a strand. The strand was cut with a pelletizer to obtain a methacrylic copolymer. The weight average molecular weight Mw, the proportion of each monomer unit, the glass transition temperature, the 1% thermogravimetric loss temperature, the flexural modulus, the saturated water absorption rate, and the melt flow rate of the obtained methacrylic copolymer were measured. Table 1 shows the results.

Precursor Polymer a-9

An MS resin (a copolymer of methyl methacrylate (MMA) and styrene (St)) was polymerized in accordance with the method for producing copolymer (A) described in the Examples of JP2003-231785A. The ratio by mass of MMA and St placed in an autoclave was changed to obtain methacrylic copolymer a-8 with an Mw of 95000 and a styrene monomer unit content of 20 mass%. Table 1 shows the physical properties.

Table 1

| | | | Production Example 1 | Production Example 2 | Production Example 3 | Production Example 4 | Production Example 5 | Production Example 6 | Production Example 7 | Production Example 8 | Production Example 9 |
|---|---|---|---|---|---|---|---|---|---|---|---|
| Precursor Polymer (a) | | | a-1 | a-2 | a-3 | a-4 | a-5 | a-6 | a-7 | a-8 | a-9 |
| Starting Material Liquid | MMA | wt% | 78 | 73 | 60 | 47 | 65 | 31 | 75 | 100 | |
| | αMSt | wt% | 18 | 13 | 19 | 25 | 28 | 13 | 25 | 0 | |
| | St | wt% | 5 | 14 | 21 | 28 | 7 | 57 | 0 | 0 | |
| | n-OM | phr | 0.10 | 0.12 | 0.15 | 0.02 | 0.01 | 0.02 | 0.02 | 0.29 | |
| | AIBN | ppm | 400 | 300 | 250 | 300 | 500 | 250 | 400 | 50 | |
| | Polymerization Temperature | °C | 130 | 130 | 130 | 140 | 140 | 110 | 130 | 140 | |
| | Average Residence Time | h | 4.0 | 3.5 | 3.5 | 3.5 | 2.5 | 3.5 | 3.0 | 2 | |
| | Polymerization Conversion Rate | % | 41 | 42 | 42 | 51 | 35 | 19 | 32 | 55 | |

(continued)

| | | | Production Example 1 | Production Example 2 | Production Example 3 | Production Example 4 | Production Example 5 | Production Example 6 | Production Example 7 | Production Example 8 | Production Example 9 |
|---|---|---|---|---|---|---|---|---|---|---|---|
| Precursor Polymer (a) | | | a-1 | a-2 | a-3 | a-4 | a-5 | a-6 | a-7 | a-8 | a-9 |
| Composition and Physical Properties of Polymer | Content of Structural Unit Derived from MMA | wt% | 82 | 74 | 63 | 52 | 76 | 32 | 88 | 100 | 80 |
| | Content of Structural Unit Derived from aMSt | wt% | 13 | 13 | 19 | 28 | 16 | 20 | 12 | 0 | 0 |
| | Content of Structural Unit Derived from St | wt% | 6 | 13 | 18 | 20 | 8 | 48 | 0 | 0 | 20 |
| | Weight Average Molecular Weight | - | 82000 | 79000 | 76500 | 130000 | 101000 | 168000 | 98000 | 75000 | 95000 |
| | Glass Transition Temperature | °C | 128 | 118 | 117 | 122 | 128 | 110 | 131 | 120 | 115 |
| | 1% Thermogravimetric Loss Temperature | °C | 282 | 294 | 292 | 292 | 271 | 320 | 242 | 320 | 310 |
| | Flexural Modulus | MPa | 3350 | 3150 | 3320 | 3350 | 3400 | 3100 | 3160 | 3000 | 3100 |
| | Saturated Water Absorption Rate | wt% | 1.3 | 1.1 | 0.7 | 0.5 | 1.5 | 0.2 | 1.7 | 2.0 | 1.6 |
| | Melt Flow Rate | g/10 min | 7.9 | 9.0 | 13.0 | 6.7 | 9.5 | 15.0 | 1.4 | 2.7 | 4.2 |

Example 1

A twin-screw extruder equipped with a transport unit, a melt-kneading unit, a volatilization unit, and a discharge unit, and set to a screw rotation speed of 100 rpm and a temperature of 230°C (trade name: TEX30α-77AW-3V, produced by The Japan Steel Works, Ltd.) was charged in its transport unit with a methacrylic copolymer (a-1) at a rate of 10 kg/hr. In the kneading block-attached melt-kneading unit, the amount of monomethylamine was adjusted to give the content of the glutarimide-derived structural unit shown in Table 2, and monomethylamine was injected into an additive-feeding port of the twin-screw extruder, thereby allowing a reaction between the precursor polymer (a-1) and monomethylamine to proceed. The melt-kneading unit was mostly composed of kneading disks and had a sealing element attached at each end. In the volatilization unit, byproducts and excess monomethylamine were volatilized from the molten resin that passed through the melt-kneading unit and discharged through multiple vents.

The molten resin extruded in the form of a strand from a die provided at the end of the discharge unit of the twin-screw extruder was cooled in a water tank and then cut with a pelletizer to obtain pelletized methacrylic copolymer (A-1). In the methacrylic copolymer (A-1), the content of the glutarimide-derived structural unit was 10 wt%, and the content of the methacrylic acid (MAA)-derived structural unit was 0 wt%. Table 2 shows the composition and physical properties of the methacrylic copolymer (A-1).

Example 2

A methacrylic copolymer (A-2) was obtained in the same manner as in Example 1, except that the amount of monomethylamine added was changed so that the content of the glutarimide-derived structural unit was 24 wt%. Table 2 shows the composition and physical properties of the methacrylic copolymer (A-2).

Example 3

A methacrylic copolymer (A-3) was obtained in the same manner as in Example 1, except that the amount of monomethylamine added was changed so that the content of the glutarimide-derived structural unit was 44 wt%. Table 2 shows the composition and physical properties of the methacrylic copolymer (A-3).

Example 4

A methacrylic copolymer (A-4) was obtained in the same manner as in Example 1, except that a methacrylic copolymer (a-2) was used instead of the methacrylic copolymer (a-1), and the amount of monomethylamine added was changed so that the content of the glutarimide-derived structural unit was 36 wt%. Table 2 shows the composition and physical properties of the methacrylic copolymer (A-4).

Example 5

A methacrylic copolymer (A-5) was obtained in the same manner as in Example 1, except that a methacrylic copolymer (a-3) was used instead of the methacrylic copolymer (a-1), and the amount of monomethylamine added was changed so that the content of the glutarimide-derived structural unit was 19 wt%. Table 2 shows the physical properties of the methacrylic copolymer (A-5).

Example 6

A methacrylic copolymer (A-6) was obtained in the same manner as in Example 1, except that a methacrylic copolymer (a-4) was used instead of the methacrylic copolymer (a-1), and the amount of monomethylamine added was changed so that the content of the glutarimide-derived structural unit was 14 wt%. Table 2 shows the physical properties of the methacrylic copolymer (A-6).

Example 7

A methacrylic copolymer (A-7) was obtained in the same manner as in Example 1, except that ammonia was used instead of monomethylamine, and the amount of ammonia added was adjusted so that the content of the glutarimide-derived structural unit was 30 wt%. Table 2 shows the physical properties of the methacrylic copolymer (A-7).

Example 8

A methacrylic copolymer (A-8) was obtained according to the method for producing a copolymer resin described in the Examples of JPS63-163302A. Table 2 shows the physical properties of the methacrylic copolymer (A-8).

Example 9

A methacrylic copolymer (A-9) was obtained in the same manner as in Example 1, except that a methacrylic copolymer (a-5) was used instead of the methacrylic copolymer (a-1), and the amount of monomethylamine added was changed so that the content of the glutarimide-derived structural unit was 50 wt%. Table 2 shows the composition and physical properties of the methacrylic copolymer (A-9).

Example 10

A methacrylic copolymer (A-10) was obtained in the same manner as in Example 9, except that the amount of monomethylamine added was changed so that the content of the glutarimide-derived structural unit was 70 wt%. Table 2 shows the composition and physical properties of the methacrylic copolymer (A-10).

Comparative Example 1

A methacrylic copolymer (A-9) was obtained in the same manner as in Example 1, except that the methacrylic copolymer (a-5) was used instead of the methacrylic copolymer (a-1), and the amount of monomethylamine added was changed so that the content of the glutarimide-derived structural unit was 24 wt%. Table 2 shows the physical properties of the methacrylic copolymer (A-9).

Comparative Example 2

A methacrylic copolymer (A-10) was obtained in the same manner as in Example 1, except that a methacrylic copolymer (a-6) was used instead of the methacrylic copolymer (a-1), and the amount of monomethylamine added was changed so that the content of the glutarimide-derived structural unit was 24 wt%. Table 2 shows the physical properties of the methacrylic copolymer (A-10) .

Comparative Example 3

A methacrylic copolymer (A-11) was obtained in the same manner as in Example 1, except that a methacrylic copolymer (a-7) was used instead of the methacrylic copolymer (a-1), and the amount of monomethylamine added was changed so that the content of the glutarimide-derived structural unit was 26 wt%. Table 2 shows the physical properties of the methacrylic copolymer (A-11) .

Comparative Example 4

A methacrylic copolymer (A-12) was obtained in the same manner as in Example 1, except that a methacrylic copolymer (a-8) was used instead of the methacrylic copolymer (a-1), and the amount of monomethylamine added was changed so that the content of the glutarimide-derived structural unit was 19 wt%. Table 2 shows the physical properties of the methacrylic copolymer (A-12) .

Comparative Example 5

A methacrylic copolymer (A-13) was obtained in the same manner as in Example 1, except that the methacrylic copolymer (a-8) was used instead of the methacrylic copolymer (a-1), and the amount of monomethylamine added was changed so that the content of the glutarimide-derived structural unit was 42 wt%. Table 2 shows the physical properties of the methacrylic copolymer (A-13) .

Table 2

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Methacrylic Copolymer (A) | | | A-1 | A-2 | A-3 | A-4 | A-5 | A-6 | A-7 | A-8 | A-9 | A-10 |
| Precursor Polymer | | | a-1 | a-1 | a-1 | a-2 | a-3 | a-4 | a-1 | | a-5 | a-5 |
| Composition and Physical Properties of Methacrylic Copolymer | Content of Structural Unit Derived from MMA | wt% | 72 | 62 | 33 | 38 | 44 | 38 | 52 | 65 | 26 | 6 |
| | Content of Structural Unit Derived from aMSt | wt% | 13 | 13 | 13 | 13 | 19 | 28 | 13 | 10 | 16 | 16 |
| | Content of Structural Unit Derived from St | wt% | 6 | 6 | 6 | 13 | 18 | 20 | 6 | 5 | 8 | 8 |
| | Content of Structural Unit Derived from Unsubstituted Glutarimide | wt% | 0 | 0 | 0 | 0 | 0 | 0 | 30 | 15 | 0 | 0 |
| | Content of Structural Unit Derived from N-substituted Glutarimide | wt% | 10 | 20 | 49 | 36 | 19 | 14 | 0 | 0 | 50 | 70 |
| | Content of Structural Unit Derived from MAA | wt% | 0 | 0 | 0 | 0 | 0 | 0 | 0 | 5 | 0 | 0 |
| | (Content of Structural Unit Derived from MMA and aMStY(Content of Structural Unit Derived from St) | - | 143 | 126 | 76 | 38 | 3.4 | 3.3 | 10.9 | 150 | 5.3 | 2.8 |
| | Glass Transition Temperature | °C | 135 | 140 | 150 | 143 | 138 | 134 | 158 | 147 | 144 | 163 |

(continued)

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Methacrylic Copolymer (A) | | A-1 | A-2 | A-3 | A-4 | A-5 | A-6 | A-7 | A-8 | A-9 | A-10 |
| Precursor Polymer | | a-1 | a-1 | a-1 | a-2 | a-3 | a-4 | a-1 | | a-5 | a-5 |
| 1% Thermogravimetric Loss Temperature | °C | 305 | 321 | 351 | 329 | 318 | 306 | 328 | 305 | 300 | 320 |
| Flexural Modulus | MPa | 3340 | 3610 | 3900 | 4070 | 3580 | 3560 | 4250 | 3850 | 4000 | 4300 |
| Saturated Water Absorption Rate | wt% | 1.8 | 1.9 | 2.5 | 1.6 | 1.2 | 1.7 | 3.4 | 2.7 | 2.1 | 2.5 |
| Melt Flow Rate | g/10 min | 70 | 6.1 | 4.5 | 6.6 | 11.5 | 5.5 | 4.5 | 5.4 | 60 | 40 |

(continued)

| | Comparative Example 1 | Comparative Example 2 | Comparative Example 3 | Comparative Example 4 | Comparative Example 5 | |
|---|---|---|---|---|---|---|

(continued)

| Methacrylic Copolymer (A) | A-11 | A-12 | A-13 | A-14 | A-15 | |
|---|---|---|---|---|---|---|
| Precursor Polymer | a-6 | a-7 | a-8 | a-9 | a-9 | |

(continued)

| | Comparative Example 1 | Comparative Example 2 | Comparative Example 3 | Comparative Example 4 | Comparative Example 5 | |
|---|---|---|---|---|---|---|

| Methacrylic Copolymer (A) | A-11 | A-12 | A-13 | A-14 | A-15 | |
|---|---|---|---|---|---|---|
| Precursor Polymer | a-6 | a-7 | a-8 | a-9 | a-9 | |

| | | | | | | | | |
|---|---|---|---|---|---|---|---|---|
| Composition and Physical Properties of Methacrylic Copolymer | Content of Structural Unit Derived from MMA | wt% | 8 | 64 | 74 | 61 | 38 | |
| | Content of Structural Unit Derived from aMSt | wt% | 20 | 12 | 0 | 0 | 0 | |
| | Content of Structural Unit Derived from St | wt% | 48 | 0 | 0 | 20 | 20 | |
| | Content of Structural Unit Derived from Unsubstituted Glutarimide | wt% | 0 | 0 | 0 | 0 | 0 | |
| | Content of Structural Unit Derived from N-substituted Glutarimide | wt% | 24 | 24 | 26 | 19 | 42 | |
| | Content of Structural Unit Derived from MAA | wt% | 0 | 0 | 0 | 0 | 0 | |
| | (Content of Structural Unit Derived from MMA and aMStY(Content of Structural Unit Derived from St) | - | 0.6 | - | - | 3.1 | 1.9 | |
| | Glass Transition Temperature | °C | 127 | 140 | 133 | 121 | 129 | |
| | 1% Thermogravimetric Loss Temperature | °C | 341 | 263 | 362 | 327 | 343 | |
| | Flexural Modulus | MPa | 3420 | 3670 | 3360 | 3500 | 3910 | |
| | Saturated Water Absorption Rate | wt% | 2.7 | 2.9 | 3.3 | 2.1 | 2.7 | |
| | Melt Flow Rate | g/10 min | 13.2 | 0.3 | 1.6 | 2.7 | 1.3 | |

Examples 11 to 24

The methacrylic copolymer (A) and the methacrylic resin (P) were mixed according to the formulas shown in Table 3, and the mixture was melt-kneaded at 250°C by using a twin-screw extruder with a shaft diameter of 20 mm and extruded, thereby obtaining a methacrylic resin composition (B). Table 3 shows the composition and physical properties of the methacrylic resin compositions and the evaluation results of the molded articles.

Table 3

| Methacrylic Resin Composition (B) | | | Example 9 | Example 10 | Example 11 | Example 12 | Example 13 | Example 14 | Example 15 | Example 16 | Example 17 | Example 18 | Example 19 | Example 20 | Example 21 | Example 22 | Example 23 | Example 24 |
|---|---|---|---|---|---|---|---|---|---|---|---|---|---|---|---|---|---|---|
| | | | B-1 | B-2 | B-3 | B-4 | B-5 | B-6 | B-7 | B-8 | B-9 | B-10 | B-11 | B-12 | B-13 | B-14 | B-15 | B-16 |
| Composition of Methacrylic Resin Composition | Methacrylic Copolymer (A-1) | Parts by Mass | 100 | | | 80 | 40 | | | | | | | | | | | |
| | Methacrylic Copolymer (A-3) | Parts by Mass | | 100 | | | | 80 | 60 | 30 | | | | | | | | |
| | Methacrylic Copolymer (A-4) | Parts by Mass | | | 100 | | | | | | 70 | 40 | 30 | | | | | |
| | Methacrylic Copolymer (A-7) | Parts by Mass | | | | | | | | | | | | 70 | | | | |
| | Methacrylic Copolymer (A-8) | Parts by Mass | | | | | | | | | | | | | 70 | | | |
| | Methacrylic Copolymer (A-9) | Parts by Mass | | | | | | | | | | | | | | 70 | 50 | |
| | Methacrylic Copolymer (A-10) | Parts by Mass | | | | | | | | | | | | | | | | 70 |
| | Methacrylic Resin (P-1) | Parts by Mass | | | | 20 | 60 | | | | | | 70 | 30 | | 30 | 50 | 30 |
| | Methacrylic Resin (P-2) | Parts by Mass | | | | | | 20 | 40 | 70 | 30 | 60 | | | 30 | | | |
| Physical Properties of Methacrylic Resin Composition and Evaluation Results of Molded Article | Glass Transition Temperature | ℃ | 135 | 150 | 143 | 132 | 126 | 142 | 134 | 121 | 133 | 123 | 127 | 147 | 136 | 137 | 132 | 150 |
| | 1% Thermogravimetric Loss Temperature | ℃ | 305 | 359 | 329 | 308 | 314 | 355 | 351 | 345 | 332 | 335 | 323 | 326 | 315 | 309 | 315 | 323 |
| | Flexural Modulus | MPa | 3440 | 3660 | 4070 | 3350 | 3180 | 3550 | 3440 | 3270 | 3780 | 3490 | 3320 | 3870 | 3620 | 3760 | 3600 | 3900 |
| | Saturated Water Absorption Rate | wt% | 1.8 | 2.8 | 1.6 | 1.9 | 2.0 | 2.6 | 2.5 | 2.2 | 1.7 | 1.8 | 2.0 | 3.0 | 2.5 | 2.1 | 2.1 | 2.4 |
| | Melt Flow Rate | g/10 min | 7.0 | 4.9 | 6.6 | 6.1 | 4.4 | 6.0 | 7.1 | 8.8 | 7.8 | 8.9 | 3.8 | 3.8 | 6.9 | 5.0 | 4.4 | 3.6 |
| | Transparency | – | Excellent | Excellent | Excellent | Excellent | Excellent | Good | Good | Good | Excellent | Excellent | Excellent | Excellent | Fair | Excellent | Excellent | Fair |
| | Surface Hardness | – | Excellent | Excellent | Excellent | Excellent | Good | Excellent | Excellent | Good | Excellent | Excellent | Good | Excellent | Excellent | Excellent | Excellent | Excellent |
| | Moldability | – | Excellent | Excellent | Excellent | Excellent | Excellent | Excellent | Excellent | Excellent | Excellent | Excellent | Excellent | Excellent | Excellent | Excellent | Excellent | Excellent |
| | Dimensional Stability | – | Excellent | Excellent | Excellent | Excellent | Excellent | Excellent | Excellent | Excellent | Excellent | Excellent | Excellent | Fair | Excellent | Excellent | Excellent | Excellent |

Comparative Examples 6 to 16

The methacrylic copolymer (A) and the methacrylic resin (P) were mixed according to the formulas shown in Table 4, and the mixture was melt-kneaded at 250°C by using a twin-screw extruder with a shaft diameter of 20 mm and extruded, thereby obtaining a methacrylic resin composition (B). Table 4 shows the composition and physical properties of the methacrylic resin compositions, and the evaluation results of the molded articles.

Table 4

| Methacrylic Resin Composition (B) | | | Comparative Example 6 | Comparative Example 7 | Comparative Example 8 | Comparative Example 9 | Comparative Example 10 | Comparative Example 11 | Comparative Example 12 | Comparative Example 13 | Comparative Example 14 | Comparative Example 15 | Comparative Example 16 |
|---|---|---|---|---|---|---|---|---|---|---|---|---|---|
| | | | B-14 | B-15 | B-16 | B-17 | B-18 | B-19 | B-20 | B-21 | B-22 | B-23 | B-24 |
| Composition of Methacrylic Resin Composition | Methacrylic Copolymer (A-9) | Parts by Mass | 100 | | | | | 70 | | | | | |
| | Methacrylic Copolymer (A-10) | Parts by Mass | | 100 | | | | | 70 | 30 | | | |
| | Methacrylic Copolymer (A-11) | Parts by Mass | | | 100 | | | | | | 70 | | |
| | Methacrylic Copolymer (A-12) | Parts by Mass | | | | 100 | | | | | | 70 | |
| | Methacrylic Copolymer (A-13) | Parts by Mass | | | | | 100 | | | | | | 70 |
| | Methacrylic Resin (P-1) | Parts by Mass | | | | | | | | | | 30 | |
| | Methacrylic Resin (P-2) | Parts by Mass | | | | | | 30 | 30 | 70 | 30 | | 30 |

(continued)

| Methacrylic Resin Composition (B) | | | Comparative Example 6 | Comparative Example 7 | Comparative Example 8 | Comparative Example 9 | Comparative Example 10 | Comparative Example 11 | Comparative Example 12 | Comparative Example 13 | Comparative Example 14 | Comparative Example 15 | Comparative Example 16 |
|---|---|---|---|---|---|---|---|---|---|---|---|---|---|
| | | | B-14 | B-15 | B-16 | B-17 | B-18 | B-19 | B-20 | B-21 | B-22 | B-23 | B-24 |
| Physical Properties of Methacrylic Resin Composition and Evaluation Results of Molded Article | Glass Transition Temperature | °C | 127 | 140 | 133 | 121 | 129 | 122 | 131 | 118 | 126 | 117 | 126 |
| | 1% Thermogravimetric Loss Temperature | °C | 341 | 263 | 362 | 327 | 343 | 340 | 286 | 316 | 355 | 330 | 336 |
| | Flexural Modulus | MPa | 3420 | 3670 | 3360 | 3500 | 3910 | 3320 | 3500 | 3270 | 3280 | 3380 | 3640 |
| | Saturated Water Absorption Rate | wt% | 2.7 | 2.9 | 3.3 | 2.1 | 2.7 | 2.5 | 2.6 | 2.3 | 2.9 | 2.1 | 2.5 |
| | Melt Flow Rate | g/10 min | 13.2 | 0.3 | 1.6 | 2.7 | 1.3 | 12.4 | 3.4 | 7.4 | 4.3 | 5.1 | 1.7 |
| | Transparency | - | Excellent | Excellent | Excellent | Excellent | Excellent | Poor | Fair | Fair | Poor | Poor | Poor |
| | Surface Hardness | - | Fair | Excellent | Excellent | Fair | Excellent | Excellent | Excellent | Excellent | Excellent | Fair | Fair |
| | Moldability | - | Excellent | Poor | Poor | Fair | Poor | Excellent | Poor | Excellent | Excellent | Excellent | Poor |
| | Dimensional Stability | - | Poor | Fair | Poor | Poor | Fair | Poor | Excellent | Poor | Fair | Poor | Excellent |

The methacrylic copolymers obtained in Examples 1 to 10 had a high level of heat resistance, rigidity, thermal decomposition resistance, and fluidity. The methacrylic resin compositions obtained in Examples 11 to 24 were excellent in transparency, surface hardness, moldability, and dimensional stability because the compositions contained such methacrylic copolymers and methacrylic resin excellent in physical properties. These results indicate that these are suitable for molding materials or optical components, such as polarizer protection films. However, falling outside the scope of the present invention, the methacrylic copolymers obtained in Comparative Examples 1 to 5 had a low level of heat resistance, poor thermal decomposition resistance and/or poor fluidity, and a high water absorption rate. Additionally, the methacrylic resin compositions obtained in Comparative Examples 6 to 16 were poor in surface hardness, moldability, dimensional stability, etc. because the compositions contained the methacrylic copolymer and methacrylic resin with poor physical properties as described above. Additionally, these methacrylic resin compositions were poor in transparency due to poor compatibility with the methacrylic resin. As described above, these methacrylic resin compositions were inferior to the present invention in at least any one of the physical properties.

## Claims

1. A methacrylic copolymer comprising

5 to 96 mass% of a methyl methacrylate unit;
1 to 70 mass% of a structural unit (R) having in its main chain at least one ring structure selected from the group consisting of a glutaric anhydride unit and an N-substituted glutarimide unit represented by the following formula (I):

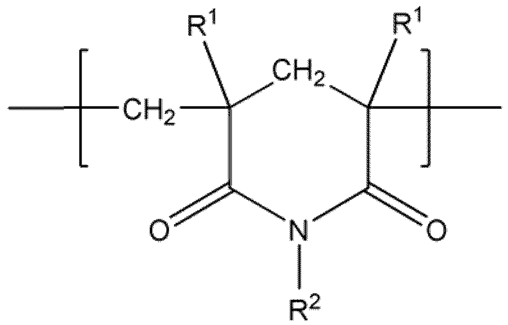

(I)

wherein each $R^1$ is independently a hydrogen atom or methyl, and $R^2$ is $C_1$-$C_{18}$ alkyl, $C_3$-$C_{12}$ cycloalkyl, or a $C_6$-$C_{15}$ organic group containing an aromatic ring;
1 to 48 mass% of an $\alpha$-methylstyrene unit; and
1 to 48 mass% of a styrene unit.

2. The methacrylic copolymer according to claim 1, wherein the structural unit (R) is the N-substituted glutarimide unit represented by formula (I).

3. The methacrylic copolymer according to claim 1, wherein the total content of the $\alpha$-methylstyrene unit and the styrene unit is 2 to 49 mass%, and the proportion of the $\alpha$-methylstyrene unit to the total content is 30 to 95 mass%.

4. The methacrylic copolymer according to claim 1, wherein the ratio of the total content of the methyl methacrylate unit and the $\alpha$-methylstyrene unit to the content of the styrene unit is 3.0 or more.

5. The methacrylic copolymer according to claim 1 comprising 0 to 1 mass% of the methacrylic acid unit.

6. The methacrylic copolymer according to claim 1 having a glass transition temperature of 140°C or higher.

7. The methacrylic copolymer according to claim 1 having a saturated water absorption rate of 3.0% or less.

8. The methacrylic polymer according to claim 1, wherein the methacrylic polymer has a melt flow rate of 2.0 g/10 minutes or more as measured at 230°C under a load of 3.8 g by a method specified in JIS K 7210.

**9.** A methacrylic resin composition comprising 20 to 100 mass% of the methacrylic copolymer (A) of claim 1 and 0 to 80 mass% of a methacrylic resin (P).

**10.** The methacrylic resin composition according to claim 8, wherein the methacrylic resin composition has a haze of 5.0% or less as measured by a method specified in JIS K 7136.

**11.** A molded article comprising the methacrylic copolymer of claim 1 or the methacrylic resin composition of claim 8.

**12.** A film comprising the methacrylic copolymer of claim 1 or the methacrylic resin composition of claim 8.

**13.** An optical film comprising the methacrylic copolymer of claim 1 or the methacrylic resin composition of claim 8.

**14.** A method for producing the methacrylic copolymer of claim 1, comprising

continuously supplying a reactant comprising a monomer mixture to a tank reactor, the monomer mixture containing 51 to 98 mass% of methyl methacrylate, 1 to 48 mass% of an α-methylstyrene unit, and 1 to 48 mass% of styrene;
polymerizing the monomer mixture in the tank reactor until a polymerization conversion rate of 30 to 60 mass% is achieved to obtain a reaction product;
removing the monomer mixture in the reaction product from the reaction product; and
subjecting the obtained methacrylic copolymer to a ring structure-forming reaction.

**15.** The method for producing a methacrylic copolymer according to claim 14, wherein the ring structure-forming reaction is an imide cyclization reaction in which an imidizing agent is added to a precursor polymer in an extruder and the resulting mixture is kneaded and allowed to react.

**INTERNATIONAL SEARCH REPORT**

International application No. **PCT/JP2022/013845**

**A. CLASSIFICATION OF SUBJECT MATTER**

***C08F 8/48***(2006.01)i; ***C08F 8/30***(2006.01)i; ***C08L 33/12***(2006.01)i; ***G02B 1/04***(2006.01)i
FI: C08F8/48; C08F8/30; C08L33/12; G02B1/04

According to International Patent Classification (IPC) or to both national classification and IPC

**B. FIELDS SEARCHED**

Minimum documentation searched (classification system followed by classification symbols)

C08F8/48; C08F8/30; C08L33/12; G02B1/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 1-315461 A (ASAHI KASEI CORP.) 20 December 1989 (1989-12-20) claims, pp. 5-9, upper left column, examples | 1-15 |
| X<br>A | JP 1-261445 A (ASAHI KASEI CORP.) 18 October 1989 (1989-10-18) claims, page 3, lower right column to page 4, lower left column , examples | 1-12, 14-15<br>13 |
| X<br>A | JP 6-136216 A (ASAHI KASEI KOGYO CO., LTD.) 17 May 1994 (1994-05-17) claims, examples | 1, 3-12, 14<br>2, 13, 15 |
| P, X | WO 2021/235393 A1 (KURARAY CO., LTD.) 25 November 2021 (2021-11-25) claims, examples | 1-15 |
| P, X | WO 2021/193922 A1 (KURARAY CO., LTD.) 30 September 2021 (2021-09-30) claims, paragraph [0141], examples | 1-15 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 April 2022** | **26 April 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/013845**

| Patent document cited in search report | Publication date (day/month/year) | Patent family member(s) | Publication date (day/month/year) |
|---|---|---|---|
| JP 1-315461 A | 20 December 1989 | US 4888387 A<br>claims, columns 5-10, examples<br>EP 332454 A2 | |
| JP 1-261445 A | 18 October 1989 | (Family: none) | |
| JP 6-136216 A | 17 May 1994 | (Family: none) | |
| WO 2021/235393 A1 | 25 November 2021 | (Family: none) | |
| WO 2021/193922 A1 | 30 September 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021049833 A
- US 2416209 A
- US 4246374 A
- JP H0242363 A
- JP 2006249202 A
- JP H10158529 A
- JP 2000230016 A
- JP 2001151814 A
- JP 2002120326 A
- JP 2002254544 A
- JP 2005146084 A
- JP 2007197703 A
- JP 2010096919 A
- WO 200510838 A1
- JP 2008274742 A
- JP 2008273140 A
- JP 2008274187 A
- JP 61026924 A
- JP H07042332 A
- JP H09100322 A
- JP 2001329021 A
- JP 2005023272 A
- JP 2003231785 A
- JP S63163302 A